# EUROPEAN PATENT SPECIFICATION

(11) **EP 0 997 625 B1**
(45) Date of publication and mention of the grant of the patent: **08.03.2006**
(21) Application number: 99121475.0
(22) Date of filing: 28.10.1999
(51) Int. Cl.: F02D 21/08, F02D 41/40, F02D 43/00, F02D 41/06

(54) **An internal combustion engine**
Brennkraftmaschine
Moteur à combustion interne

(30) Priority: 29.10.1998 JP 30864698; 13.11.1998 JP 32395298
(43) Date of publication of application: 03.05.2000
(73) Proprietor: Toyota Jidosha Kabushiki Kaisha, Toyota-shi, Aichi-ken 471-8571 (JP)
(72) Inventor: Sasaki, Shizuo, Toyota-shi, Aichi-ken 471-8571 (JP); Gotoh, Masato, Toyota-shi, Aichi-ken 471-8571 (JP); Ito, Takekazu, Toyota-shi, Aichi-ken 471-8571 (JP); Yoshizaki, Kouji, Toyota-shi, Aichi-ken 471-8571 (JP); Murata, Hiroki, Toyota-shi, Aichi-ken 471-8571 (JP)
(74) Representative: TBK-Patent

(56) References cited:
- EP-A- 0 732 485
- EP-A- 0 803 645
- DE-A- 2 934 437
- DE-A- 4 333 424
- DE-C- 4 134 593
- JP-A- 404 246 259
- JP-A- 408 028 321
- US-A- 4 625 702
- YANAGIHARA H ET AL: "A STUDY OF DI DIESEL COMBUSTION UNDER UNIFORM HIGHER-DISPERSED MIXTURE FORMATION" JSAE REVIEW, SOCIETY OF AUTOMOTIVE ENGINEERS OF JAPAN, TOKYO, JP, vol. 18, no. 3, July 1997 (1997-07), pages 247-254, XP000979665 ISSN: 0389-4304

## Description

### BACKGROUND OF THE INVENTION

### 1. Field of the Invention

The present invention relates to an internal combustion engine.

### 2. Description of the Related Art

In the past, in an internal combustion engine, for example, a diesel engine, the production of NOx has been suppressed by connecting the engine exhaust passage and the engine intake passage by an exhaust gas recirculation (EGR) passage so as to cause the exhaust gas, that is, the EGR gas, to recirculate in the engine intake passage through the EGR passage. In this case, the EGR gas has a relatively high specific heat and therefore can absorb a large amount of heat, so the larger the amount of EGR gas, that is, the higher the EGR rate (amount of EGR gas/(amount of EGR gas + amount of intake air), the lower the combustion temperature in the engine intake passage. When the combustion temperature falls, the amount of NOx produced falls and therefore the higher the EGR rate, the lower the amount of NOx produced.

In this way, in the past, the higher the EGR rate, the lower the amount of NOx produced can become. If the EGR rate is increased, however, the amount of soot produced, that is, the smoke, starts to sharply rise when the EGR rate passes a certain limit. In this point, in the past, it was believed that if the EGR rate was increased, the smoke would increase without limit. Therefore, it was believed that the EGR rate at which smoke starts to rise sharply was the maximum allowable limit of the EGR rate.

Therefore, in the past, the EGR rate was set within a range not exceeding the maximum allowable limit. The maximum allowable limit of the EGR rate differs considerably according to the type of the engine and the fuel, but was from 30 percent to 50 percent or so. Accordingly, in diesel engines, the EGR rate was suppressed to 30 percent to 50 percent at a maximum.

Since it was believed in the past that there was a maximum allowable limit to the EGR rate, in the past the EGR rate had been set so that the amount of NOx and smoke produced would become as small as possible within a range not exceeding that maximum allowable limit. Even if the EGR rate is set in this way so that the amount of NOx and smoke produced becomes as small as possible, however, there are limits to the reduction of the amount of production of NOx and smoke. In practice, therefore, a considerable amount of NO and smoke continues to be produced.

The present inventors, however, discovered in the process of studies on the combustion in diesel engines that if the EGR rate is made larger than the maximum allowable limit, the smoke sharply increases as explained above, but there is a peak to the amount of the smoke produced and once this peak is passed, if the EGR rate is made further larger, the smoke starts to sharply decrease and that if the EGR rate is made at least 70 percent during engine idling or if the EGR gas is forcedly cooled and the EGR rate is made at least 55 percent or so, the smoke will almost completely disappear, that is, almost no soot will be produced. Further, they found that the amount of NOx produced at this time was extremely small. They engaged in further studies, later, based on this discovery to determine the reasons why soot was not produced and, as a result, constructed a new system for combustion able to simultaneously reduce the soot and NOx more than ever before. This new system for combustion will be explained in detail later, but briefly it is based on the idea of stopping the growth of hydrocarbons into soot at a stage before the hydrocarbons grow.

That is, what was found from repeated experiments and research was that the growth of hydrocarbons into soot stops at a stage before that happens when the temperatures of the fuel and the gas around the fuel at the time of combustion in the engine combustion chamber are lower than a certain temperature and the hydrocarbons grow to soot all at once when the temperatures of the fuel and the gas around the fuel become higher than a certain temperature. In this case, the temperatures of the fuel and the gas around the fuel are greatly affected by the heat absorbing action of the gas around the fuel at the time of combustion of the fuel. By adjusting the amount of heat absorbed by the gas around the fuel in accordance with the amount of heat generated at the time of combustion of the fuel, it is possible to control the temperatures of the fuel and the gas around the fuel.

Therefore, if the temperatures of the fuel and the gas around the fuel at the time of combustion in the engine combustion chamber are suppressed to less than the temperature at which the growth of the hydrocarbons stops midway, soot is no longer produced. The temperatures of the fuel and the gas around the fuel at the time of combustion in the combustion chamber can be suppressed to less than the temperature at which the growth of the hydrocarbons stops midway by adjusting the amount of heat absorbed by the gas around the fuel. On the other hand, the hydrocarbons stopped in growth midway before becoming soot can be easily purified by after-treatment using an oxidation catalyst etc. This is the basic thinking behind this new system for combustion. The present applicant's Japanese Unexamined Patent Publication No. 9-305,850 discloses an internal combustion engine employing this new system for combustion.

By the way, as disclosed above, in order to practice this new type of combustion, it is necessary to maintain the temperatures of the fuel and the gas around the fuel at the time of the combustion a temperature lower than a certain temperature. If the temperature of the gas becomes considerably high, smoke is produced. If the temperature of the gas becomes considerably low, the combustion does not sufficiently occur. That is, in order to practice this new type of combustion, it is necessary to maintain the temperatures of the fuel and the gas around the fuel at the time of the combustion within the optional temperature range. To this end, there are optimal values of the timing of the fuel injection, EGR rate, air-fuel ratio and so. Therefore, in order to practice the new type of the combustion, it is necessary to control the timing of the fuel injection, EGR rate, air-fuel ratio and so to the optimal values.

The optimal values of the timing of the fuel injection, EGR rate, air-fuel ratio and so on necessary to maintain the temperatures of the fuel and the gas around the fuel at the time of the combustion within the optimal temperature range are affected by a temperature of the engine. Therefore, these optimal values are different during the warming up of the engine and after the completion of the warming up of the engine. Thus, it is necessary to control the timing of the fuel injection, EGR rate, air-fuel ratio and so on in consideration of the above in order to practice the new type of the combustion.

Yanagihara H et al "A study of DI Diesel combustion engines under uniform higher-dispersed mixture formation" JSAE Review, Society of Automotive Engineers of Japan, vol. 18, no. 3, July 1997, pages 247-254, deals with striving for a favourable mixture formation in an engine by which a sufficient dispersion can be found. In this paper, there is stated an example wherein the amount of inert gas (here the EGR-ratio) introduced into the combustion chamber is made larger than an amount of inert gas where the amount of production of soot peaks. In particular, in one example with 20BTDC (slightly advancing injection timing) and in another example with 90BTDC (more advancing injection timing) the relation between EGR-ratio and soot production is shown. However, in the example of 90BTDC (which is stated as being preferred since with 90BTDC the fuel dispersion is sufficient), the production of soot does not peak but is almost zero. Contrary thereto, in the example of 20BTDC, the production of soot peaks at about 50 % EGR-ratio. However, the example of 20BTDC is described as unfavourable because of the incomplete combustion.

### SUMMARY OF THE INVENTION

An object of the present is to provide an internal combustion engine which is operated under a new principle of combustion constituting the basis of a new combustion system.

This object is solved by an internal combustion engine having the features of claim 1.

Further advantageous developments are subject matter of the further claims.

### BRIEF DESCRIPTION OF THE DRAWINGS

The present invention may be more fully understood from the description of the preferred embodiments of the invention set forth below together with the accompanying drawings, in which:
Fig. 1 is an overall view of a compression ignition type internal combustion engine;
Fig. 2 is a view of the amount of generation of smoke and NOx;
Figs. 3A and 3B are views of the combustion pressure;
Fig. 4 is a view of a fuel molecule;
Fig. 5 is a view of the relationship between the amount of generation of smoke and the EGR rate;
Fig. 6 is a view of the relationship between the amount of injected fuel and the amount of mixed gas;
Fig. 7 is a view of the first and second operation regions I and II;
Fig. 8A and 8B are views illustrating the function to absorb and release NOx;
Fig. 9 is a view of the output of the air fuel ratio sensor;
Fig. 10 is a view of the opening degree of a throttle valve etc;
Figs. 11A and 11B are views of the required load;
Fig. 12 is a view of the air fuel ratio in the first operation region I;
Figs. 13A and 13B are views of the amount of the injected fuel etc;
Figs. 14A to 14C are views of the target opening degree of the throttle valve etc;
Fig. 15 is a view of the air fuel ratio in the second operation region II;
Figs. 16A and 16B are views of the amount of the injected fuel etc;
Figs. 17A to 17C are views of the target opening degree of the throttle valve etc;
Fig. 18 is a view of the suitable region where the low temperature combustion is better performed;
Figs. 19A to 19D are views of the advance of the fuel injection timing etc;
Fig. 20 is a flowchart of engine operation control;
Fig. 21 is an overall view of a compression ignition type internal combustion engine of the second embodiment;
Figs. 22A and 22B are views of the amount of the absorbed NOx per unit time;
Fig. 23 is a view for explaining the NOx releasing control;
Fig. 24 is a flowchart of process of NOx releasing flag;
Figs. 25A and 25B are views of the amount of the adsorbed hydrocarbons per unit time;
Fig. 26 is a view of process of the HC flag;
Figs. 27 and 28 are flowcharts of the engine operation control;
Fig. 29 is a view of the increase of the amount of the injected fuel; and
Fig. 30 is a flowchart of the process before the completion of warming up of the engine.

### DESCRIPTION OF THE PREFERRED EMBODIMENTS

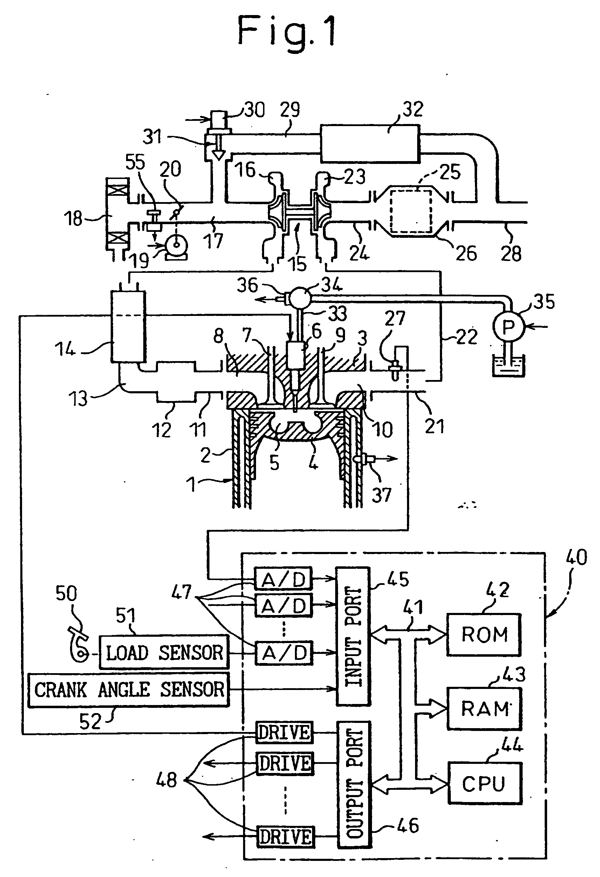

Figure 1 is a view of the case of application of the present invention to a four-stroke compression ignition type internal combustion engine.

Referring to Fig. 1, 1 shows an engine body, 2 a cylinder block, 3 a cylinder head, 4 a piston, 5 a combustion chamber, 6 an electrically controlled fuel injector, 7 an intake valve, 8 an intake port, 9 an exhaust valve, and 10 an exhaust port. The intake port 8 is connected through a corresponding intake tube 11 to the surge tank 12.

The surge tank 12 is connected through an intake duct 13 and an intercooler 14 to a turbocharger, for example an outlet portion of a compressor 16 of an exhaust turbocharger 15. An inlet portion of the compressor 16 is connected through an air intake tube 17 to an air cleaner 18. A throttle valve 20 driven by a step motor 19 is arranged in the air intake tube 17.

On the other hand, the exhaust port 10 is connected through an exhaust manifold 21 and an exhaust tube 22 to an inlet portion of an exhaust turbine 23 of the exhaust turbocharger 15. An outlet portion of the exhaust turbine 23 is connected through the exhaust tube 24 to a catalytic converter 26 housing a catalyst 25 having an oxidation action. An air fuel ratio sensor 27 is arranged in the exhaust manifold 21. An air flow sensor 55 is arranged in the air intake tube 17 upstream of the throttle valve 20.

The exhaust tube 28 connected to the outlet portion of the catalytic converter 26 and the air intake tube 17 downstream of the throttle valve 20 are connected with each other through an EGR passage 29. An EGR control valve 31 driven by a step motor 30 is arranged in an EGR passage 29. An intercooler 32 is arranged in the EGR passage 29 for cooling the EGR gas flowing through the EGR passage 29. In the embodiment shown in Fig. 1, an engine cooling water is introduced into the intercooler 32. The EGR gas is cooled by the engine cooling water. Each fuel injector 6 is connected through a fuel supply tube 33 to the fuel reservoir, that is, a common rail 34. Fuel is supplied to the common rail 24 from an electrically controlled variable discharge fuel pump 35. Fuel supplied in the common rail 24 is supplied through each fuel supply tube 33 to the fuel injector 6. A fuel pressure sensor 36 for detecting the fuel pressure in the common rail 34 is attached to the common rail 34. The amount of discharge of the fuel pump 35 is controlled based on the output signal of the fuel pressure sensor 36 so that the fuel pressure in the common rail 34 becomes the target fuel pressure.

The electronic control unit 40 is comprised of a digital computer and is provided with a ROM (read only memory) 42, a RAM (random access memory) 43, a CPU (microprocessor) 44, an input port 45, and an output port 46 connected with each other by a bidirectional bus 41. The output signal of the air fuel ratio sensor 27 is input through a corresponding AD converter 47 to the input port 45. Further, the output signal of the fuel pressure sensor 36 is input through a corresponding AD converter 47 to the input port 45. Further, the output signal of the air flow sensor 55 is input through a corresponding AD converter 47 to the input port 45. A temperature sensor 37 for detecting the temperature of the engine cooling water is attached to the engine body 1. The output signal of the temperature sensor 37 is input through a corresponding AD converter 47 to the input port 45. The accelerator pedal 50 has connected to it a load sensor 51 for generating an output voltage proportional to the amount of depression L of the accelerator pedal 50. The output voltage of the load sensor 51 is input through a corresponding AD converter 47 to the input port 45. Further, the input port 45 has connected to it a crank angle sensor 52 for generating an output pulse each time the crankshaft rotates by for example 30°. On the other hand, the output port 46 has connected to it through a corresponding drive circuit 48 the fuel injector 6, the step motor 19 for controlling the throttle valve 15, the step motor 30 for controlling EGR control valve 31, and fuel pump 35.

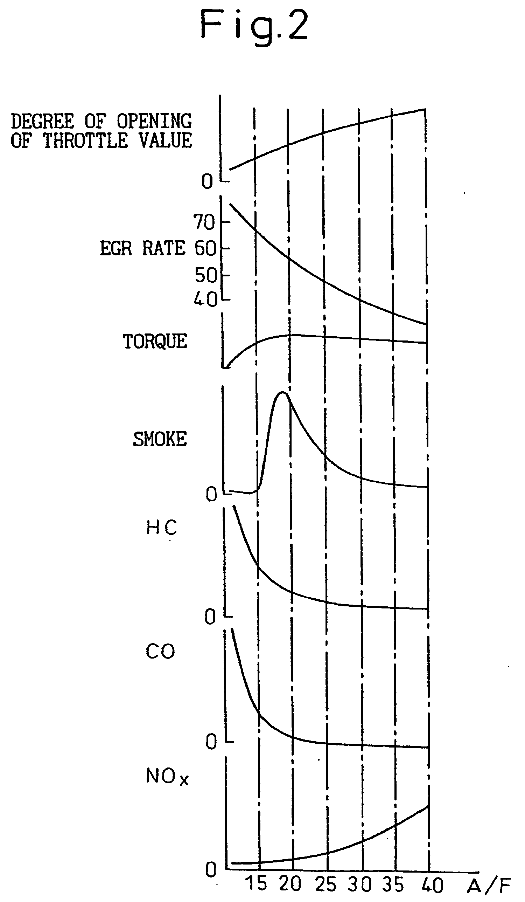

Figure 2 shows an example of an experiment showing the changes in the output torque, the amounts of smoke, HC, CO, and NOx exhausted at that time when the air fuel ratio A/F (abscissa in Fig. 2) is changed by changing the opening degree of the throttle valve 20, and the EGR rate, at the time of engine low load operation. As will be understood from Fig. 2, in this experiment, the EGR rate becomes larger as the air fuel ratio A/F becomes smaller. When below the stoichiometric air fuel ratio (≒ 14.6), the EGR rate becomes over 65 percent.

As shown in Fig. 2, if the EGR rate is increased to reduce the air fuel ratio A/F, when the EGR rate becomes close to 40 percent and the air fuel ratio A/F becomes 30 degrees, the amount of smoke produced starts to increase. Next, when the EGR rate is further raised and the air fuel ratio A/F is made smaller, the amount of smoke produced sharply increases and peaks. Next, when the EGR rate is further raised and the air-fuel ratio A/F is made smaller, the smoke sharply falls. When the EGR rate is made over 65 percent and the air fuel ratio A/F becomes close to 15.0, the smoke produced becomes substantially zero. That is, almost no soot is produced any longer. At this time, the output torque of the engine falls somewhat and the amount of NOx produced becomes considerably lower. On the other hand, at this time, the amounts of HC and CO produced start to increase.

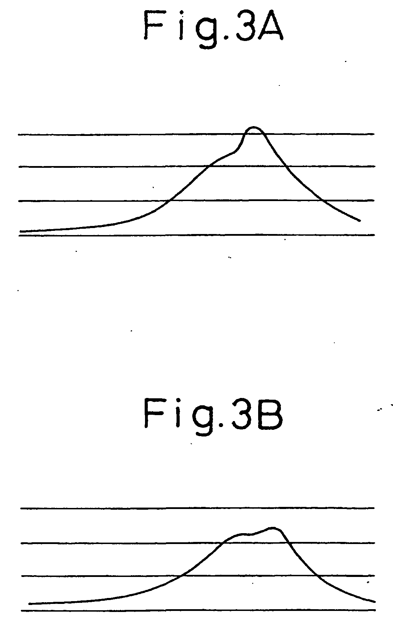

Figure 3A shows the changes in compression pressure in the combustion chamber 5 when the amount of smoke produced is the greatest near an air fuel ratio A/F of 21. Figure 3B shows the changes in compression pressure in the combustion chamber 5 when the amount of smoke produced is substantially zero near an air fuel ratio A/F of 18. As will be understood from a comparison of Fig. 3A and Fig. 3B, the combustion pressure is lower in the case shown in Fig. 3B, where the amount of smoke produced is substantially zero, than the case shown in Fig. 3A where the amount of smoke produced is large.

The following may be said from the results of the experiment shown in Fig. 2 and Figs. 3A and 3B. That is, first, when the air fuel ratio A/F is less than 15.0 and the amount of smoke produced is substantially zero, the amount of NOx produced falls considerably as shown in Fig. 2. The fact that the amount of NOx produced falls means that the combustion temperature in the combustion chamber 5 falls. Therefore, it can be said that when almost no soot is produced, the combustion temperature in the combustion chamber 5 becomes lower. The same thing may be said from Figs. 3A and 3B. That is, in the state shown in Fig. 3B where almost no soot is produced, the combustion pressure becomes lower, therefore the combustion temperature in the combustion chamber 5 becomes lower at this time.

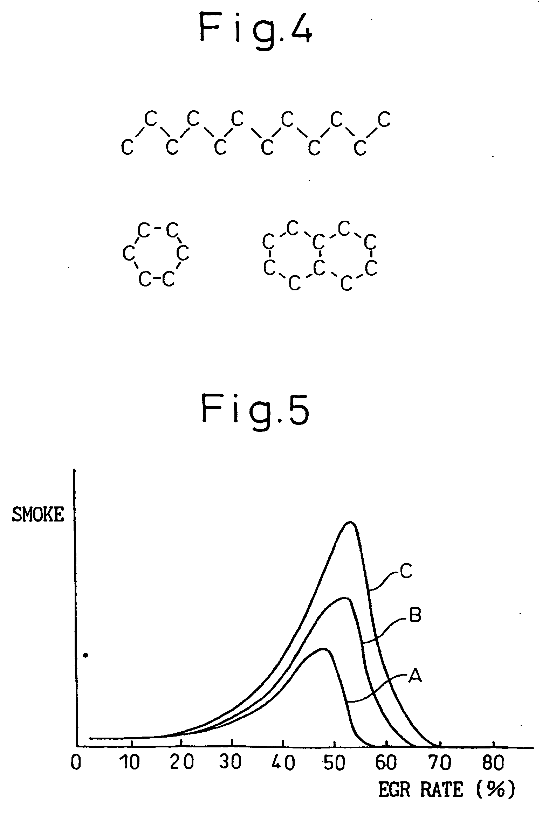

Second, when the amount of smoke produced, that is, the amount of soot produced, becomes substantially zero, as shown in Fig. 2, the amounts of HC and CO increase. This means that the hydrocarbons are exhausted without growing into soot. That is, the straight chain hydrocarbons and aromatic hydrocarbons contained in the fuel and shown in Fig. 4 decompose when raised in temperature in an oxygen insufficient state resulting in the formation of a precursor of soot. Next, soot mainly comprised of solid masses of carbon atoms is produced. In this case, the actual process of production of soot is complicated. How the precursor of soot is formed is not clear, but whatever the case, the hydrocarbons shown in Fig. 4 grow to soot through the soot precursor. Therefore, as explained above, when the amount of production of soot becomes substantially zero, the amount of exhaust of HC and CO increases as shown in Fig. 2, but the HC at this time is a soot precursor or a hydrocarbon which is a precursor to a soot precursor.

Summarizing these considerations based on the results of the experiments shown in Fig. 2 and Figs. 3A and 3B, when the combustion temperature in the combustion chamber 5 is low, the amount of soot produced becomes substantially zero. At this time a soot precursor or a hydrocarbon which is a precursor to a soot precursor is exhausted from the engine combustion chamber. More detailed experiments and studies were conducted. As a result, it was learned that when the temperatures of the fuel and the gas around the fuel in the engine combustion chamber 5 are below a certain temperature, the process of growth of soot stops midway, that is, no soot at all is produced and that when the temperature of the fuel and its surroundings in the engine combustion chamber 5 becomes higher than the certain temperature, soot is produced.

The temperature of the fuel and its surroundings when the process of production of hydrocarbons stops in the state of the soot precursor, that is, the above certain temperature, changes depending on various factors such as the type of the fuel, the air fuel ratio, and the compression ratio, so it cannot be said what degree it is, but this certain temperature is deeply related to the amount of production of NOx. Therefore, this certain temperature can be defined to a certain degree by the amount of production of NOx. That is, the greater the EGR rate, the lower the temperature of the fuel and the gas surrounding it at the time of combustion and the lower the amount of NOx produced. At this time, when the amount of NOx produced becomes around 10 ppm or less, almost no soot is produced any more. Therefore, the above certain temperature substantially matches the temperature when the amount of NOx produced becomes around 10 ppm or less.

Once soot is produced, it is impossible to remove it by after-treatment using a catalyst having an oxidation action. As opposed to this, a soot precursor or a state of hydrocarbons before this can be easily removed by after-treatment using a catalyst an oxidation action. Considering after-treatment by a catalyst having an oxidation action, there is an extremely great difference between whether the hydrocarbons are exhausted from the engine combustion chamber 5 in the form of a soot precursor or a state before that or exhausted from the engine combustion chamber 5 in the form of soot. The combustion system according to the present invention is based on the idea of exhausting the hydrocarbons from the engine combustion chamber 5 in the form of a soot precursor or a state before that without allowing the production of soot in the engine combustion chamber 5 and causing the hydrocarbons to oxide by a catalyst having an oxidation action.

Now, to stop the growth of hydrocarbons in the state before the production of soot, it is necessary to suppress the temperatures of the fuel and the gas around it at the time of combustion in the engine combustion chamber 5 to a temperature lower than the temperature where soot is produced. In this case, it was learned that the heat absorbing action of the gas around the fuel at the time of combustion of the fuel has an extremely great effect in suppression of the temperatures of the fuel and the gas around it.

That is, if there is only air around the fuel, the vaporized fuel will immediately react with the oxygen in the air and burn. In this case, the temperature of the air away from the fuel does not rise that much. Only the temperature around the fuel becomes locally extremely high. That is, at this time, the air away from the fuel does not absorb the heat of combustion of the fuel much at all. In this case, since the combustion temperature becomes extremely high locally, the unburned hydrocarbons receiving the heat of combustion produce soot.

On the other hand, when there is fuel in a mixed gas of a large amount of inert gas and a small amount of air, the situation is somewhat different. In this case, the evaporated fuel disperses in the surroundings and reacts with the oxygen mixed in the inert gas to burn. In this case, the heat of combustion is absorbed by the surrounding inert gas, so the combustion temperature no longer rises that much. That is, the presence of inert gas plays an important role in the suppression of the combustion temperature. It is possible to suppress the combustion temperature by the heat absorbing action of the inert gas.

In this case, to suppress the temperatures of the fuel and the gas around it to a temperature lower than the temperature at which soot is produced, an amount of inert gas enough to absorb an amount of heat sufficient for lowering the temperatures is required. Therefore, if the amount of fuel increases, the amount of inert gas required increases along with the same. Note that in this case the larger the specific heat of the inert gas, the stronger the heat absorbing action. Therefore, the inert gas is preferably a gas with a large specific heat. In this regard, since CO₂ and EGR gas have relatively large specific heats, it may be said to be preferable to use EGR gas as the inert gas.

Figure 5 shows the relationship between the EGR rate and smoke when EGR gas is used as the inert gas and the degree of cooling of the EGR gas is changed. That is, the curve A in Fig. 5 shows the case of strongly cooling the EGR gas and maintaining the temperature of the EGR gas at about 90°C, curve B shows the case of cooling the EGR gas by a compact cooling apparatus, and curve C shows the case of not strongly cooling the EGR gas.

When the EGR gas is strongly cooled, as shown by the curve A in Fig. 5, the amount of soot produced peaks when the EGR rate is a little under 50 percent. In this case, if the EGR rate is made about 55 percent or higher, almost no soot is produced.

On the other hand, when the EGR gas is slightly cooled, as shown by curve B in Fig. 5, the amount of soot produced peaks when the EGR rate is slightly higher than 50 percent. In this case, if the EGR rate is made above about 65 percent, almost no soot is produced.

Further, when the EGR gas is not forcibly cooled, as shown by curve C in Fig. 5, the amount of soot produced peaks near an EGR rate near 55 percent. In this case, if the EGR rate is made over about 70 percent, almost no soot is produced.

Note that Fig. 5 shows the amount of smoke produced when the engine load is relatively high. When the engine load becomes smaller, the EGR rate at which the amount of soot produced peaks falls somewhat and the lower limit of the EGR rate at which almost no soot is produced falls somewhat. In this way, the lower limit of the EGR rate at which almost no soot is produced changes in accordance with the degree of cooling of the EGR gas or the engine load.

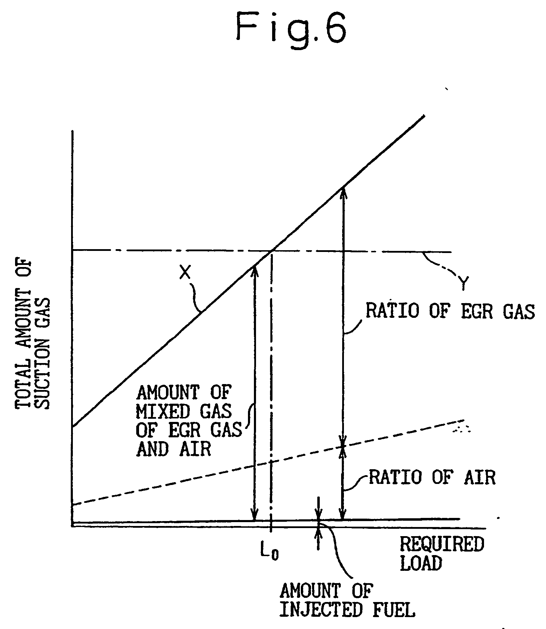

Figure 6 shows the amount of mixed gas of EGR gas and air, the ratio of air in the mixed gas, and the ratio of EGR gas in the mixed gas, required for making the temperatures of the fuel and the gas around it at the time of combustion a temperature lower than the temperature at which soot is produced in the case of use of EGR gas as an inert gas. Note that in Fig. 6, the ordinate shows the total amount of suction gas taken into the engine combustion chamber 5. The broken line Y shows the total amount of suction gas able to be taken into the engine combustion chamber 5 when supercharging is not being performed. Further, the horizontal axis shows the required load.

Referring to Fig. 6, the ratio of air, that is, the amount of air in the mixed gas, shows the amount of air necessary for causing the injected fuel to completely burn. That is, in the case shown in Fig. 6, the ratio of the amount of air and the amount of injected fuel becomes the stoichiometric air fuel ratio. On the other hand, in Fig. 6, the ratio of EGR gas, that is, the amount of EGR gas in the mixed gas, shows the minimum amount of EGR gas required for making the temperatures of the fuel and the gas around it a temperature lower than the temperature at which soot is produced when the injected fuel in burned. This amount of EGR gas is, expressed in terms of the EGR rate, greater than about 55 percent and, in the embodiment shown in Fig. 6, greater than about 70 percent. That is, if the total amount of suction gas taken into the engine combustion chamber 5 is made the solid line X in Fig. 6 and the ratio between the amount of air and amount of EGR gas in the total amount of suction gas X is made the ratio shown in Fig. 6, the temperatures of the fuel and the gas around it becomes a temperature lower than the temperature at which soot is produced and therefore no soot at all is produced. Further, the amount of NOx produced at this time is around 10 ppm or less and therefore the amount of NOx produced becomes extremely small.

If the amount of fuel injected increases, the amount of heat generated at the time of combustion increases, so to maintain the temperatures of the fuel and the gas around it at a temperature lower than the temperature at which soot is produced, the amount of heat absorbed by the EGR gas must be increased. Therefore, as shown in Fig. 6, the amount of EGR gas has to be increased the greater the amount of injected fuel. That is, the amount of EGR gas has to be increased as the required load becomes higher.

By the way, when not supercharging, the maximum limitation of the total amount of the suction gas X which is taken in the combustion chamber 5 is Y. Therefore, in the region in Fig. 6 in which the required load is larger than L₀, it is impossible to maintain the air fuel ratio at the stoichiometric air fuel ratio unless the ratio of the EGR gas is reduced as the required load increases. In other words, when not supercharging, in the region which the required load is longer than L₀ in order to maintain the air fuel ratio at the stoichiometric air fuel ratio, the EGR rate is reduced as the required load increases, and therefore, it becomes impossible to maintain the temperatures of the fuel and the gas around it at the temperature lower than the temperature at which the soot is produced in the region which the required load is larger than L₀.

To the contrary, as shown in Fig. 1, when the EGR gas is circulated through the EGR passage 29 to the inlet of the turbocharger, that is, the air intake tube 17 of the exhaust turbocharger 15, it is possible to maintain the EGR rate 55 percent or more, for example, 70 percent in the region where the required load is larger than L₀, and therefore, it is possible to maintain the temperatures of the fuel and the gas around it at the temperature lower than the temperature at which the soot is produced. That is, if the EGR gas is circulated so that the EGR rate in the air intake tube 17 becomes, for example, 70 percent, the EGR rate in the suction gas pressurized by the compressor 16 of the exhaust turbocharger 15 becomes 70 percent, and therefore, it is possible to maintain the temperatures of the fuel and the gas around it at the temperature lower than the temperature at which the soot is produced until the pressurization by the compressor 16 is limited. Therefore, it is possible to expand the region where the engine is operated under the low temperature combustion state.

Note that in order to make the EGR rate 55 percent or more in the region where the required load is larger than L₀, the EGR control valve 31 is fully opened, and the throttle valve 20 is closed somewhat.

As explained above, Fig. 6 shows the case of combustion of fuel at the stoichiometric air fuel ratio. Even if the air fuel ratio is made smaller than the amount of air shown in Fig. 6, that is, even if the air fuel ratio is made rich, it is possible to obstruct the production of soot and make the amount of NOx produced around 10 ppm or less. Further, even if the air fuel ratio is made greater than the amount of air shown in Fig. 6, that is, the mean value of the air fuel ratio is made a lean 17 to 18, it is possible to obstruct the production of soot and make the amount of NOx produced around 10 ppm or less.

That is, when the air fuel ratio is made rich, the fuel becomes in excess, but since the fuel temperature is suppressed to a low temperature, the excess fuel does not grow into soot and therefore soot is not produced. Further, at this time, only an extremely small amount of NOx is produced. On the other hand, when the mean air fuel ratio is lean or when the air fuel ratio is the stoichiometric air fuel ratio, a small amount of soot is produced if the combustion temperature becomes higher, but in the present invention, the combustion temperature is suppressed to a low temperature, so no soot at all is produced. Further, only an extremely small amount of NOx is produced.

In this way, in the low temperature engine operation, despite the air fuel ratio, that is, whether the air fuel ratio is rich or the stoichiometric air fuel ratio or the mean air fuel ratio is lean, no soot is produced and the amount of NOx produced becomes extremely small. Therefore, considering the improvement of the fuel consumption rate, it may be said to be preferable to make the mean air fuel ratio lean.

By the way, it is possible to suppress the temperatures of the fuel and the gas around it at the time of the combustion in the combustion chamber to the temperature or less at which the growth of the hydrocarbons is stopped midway only in the middle or low load engine operation which the around of the heat produced by the combustion is relatively low. Therefore, in the embodiment of the present invention, in the middle or low load engine operation, the temperatures of the fuel and the gas around it at the time of the combustion is suppressed to the temperature or less at which the growth of the hydrocarbon is stopped midway, and the first combustion, that is, the low temperature combustion is operated. On the other hand, in the high load engine operation, the second combustion, that is, the normal conventional combustion is operated. It should be understood from the above explanation that the first combustion means a combustion which the amount of the inert gas in the combustion chamber is larger than that at which the amount of the soot produced peaks, and almost no soot is produced, and the second combustion, that is, the normal conventional combustion means a combustion which the amount of the inert gas in the combustion chamber is smaller than that which the amount of the soot produced peaks.

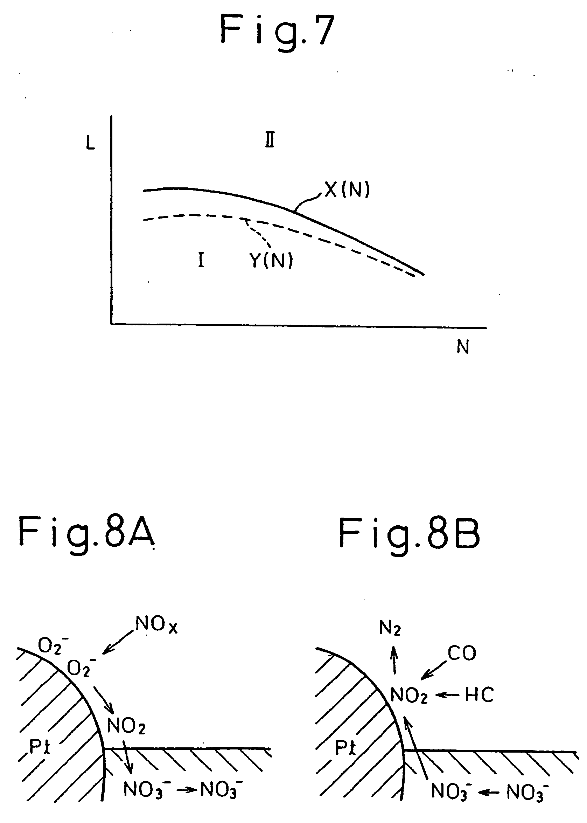

Fig. 7 shows the first combustion, that is, the first operation region I where the low temperature combustion is operated, and the second combustion, that is, the second operation region II where the combustion is operated by the conventional way. Note that in Fig. 7, the ordinate L shows the required torque, and the abscissa N shows the engine speed. Further, in Fig. 7, X(N) shows a first boundary between the first operation region I and the second operation region II, and Y(N) shows a second boundary between the first operation region I and the second operation region II. The change from the first operation region I to the second operation region II is determined on the basis of the first boundary X(N). On the other hand, the change from the second operation region II to the first operation region I is determined on the basis of the second boundary Y(N).

That is, when the operation state of the engine is in the first operation region I and the low temperature combustion is operated, it is judged that the operation region is changed to the second operation region II when the required load L exceeds the first boundary X(N) which is a function of the engine speed. The combustion is then operated by the conventional way. Later, it is judged that the operation region is changed to the first operation region I when the required load L becomes lower than the second boundary Y(N) which is a function of the engine speed. The low temperature combustion is then operated again.

There are the following two reasons why the first boundary X(N), and the second boundary Y(N) which is in a lower load side relative to the first boundary X(N) are provided as explained above. The first reason is that the combustion temperature is relatively high in a higher load side in the second operation region II, and at this time it is impossible to operate the low temperature operation immediately when the required load L becomes lower than the first boundary X(N). That is, the low temperature combustion is started to be operated only when the required load L becomes considerably low, that is, when the required load L becomes lower than the second boundary Y(N). The second reason is to provide a hysteresis for the change of the operation region between the first and second operation regions I and II.

When the engine operation state is in the first operation region I and the low temperature combustion is operated, almost no soot is produced, and instead, the unburned hydrocarbons are discharged from the combustion chamber 5 in the state of the soot precursor or a hydrocarbon which is a precursor to a soot precursor. At this time, the unburned hydrocarbons discharged from the combustion chamber 5 is better oxidized by the catalyst 25 having an oxidation action.

An oxidation catalyst, a three-way catalyst, or a NOx absorbent may be used as the catalyst 25.

The NOx absorbent uses, for example, alumina as a carrier. On this carrier, at least one substance selected from alkali metals, for example, potassium K, sodium Na, lithium Li, and cesium Cs; alkali earths, for example, barium Ba and calcium Ca; and rare earths, for example, lanthanum La and yttrium Y and a precious metal such as platinum Pt are carried. When referring to the ratio between the air and fuel (hydrocarbons) fed into the intake passage of the engine, the combustion chamber and the exhaust passage upstream of the NOx absorbent as the air-fuel ratio of the inflowing exhaust gas flowing into the NOx absorbent, this NOx absorbent performs the absorption and releasing function of NOx by absorbing the NOx when the air-fuel ratio of the inflowing exhaust gas is lean, while releasing the absorbed NOx when the concentration of oxygen in the inflowing exhaust gas falls.

When the above-mentioned NOx absorbent is disposed in the exhaust passage of the engine, this NOx absorbent actually performs the absorption and releasing function of NOx, but there are areas of the exact mechanism of this absorption and releasing function which are not clear. However, it can be considered that this absorption and releasing function is conducted by the mechanism as shown in Figs. 8A and 8B. This mechanism will be explained by using as an example a case where platinum Pt and barium Ba are carried on the carrier, but a similar mechanism is obtained even if another precious metal, alkali metal, alkali earth, or rare earth is used.

In the combustion ignition internal engine shown in Fig. 1, the combustion is normally operated in the state that the air fuel ratio in the combustion chamber 5 is lean. When the combustion is operated in the state that the air fuel ratio is lean, the concentration of oxygen in the inflowing exhaust gas is high. As shown in Fig. 8A, the oxygen O₂ is deposited on the surface of the platinum Pt in the form of O₂⁻ or O²⁻. On the other hand, the NO in the inflowing exhaust gas reacts with the O₂⁻ or O²⁻ on the surface of the platinum Pt and becomes NO₂ (2NO + O₂ → 2NO₂). Subsequently, a part of the produced NO₂ is oxidized on the platinum Pt and absorbed into the absorbent. While bonding with the barium oxide Bao, it is diffused in the absorbent in the form of nitric acid ions NO₃⁻ as shown in Fig. 8A. In this way, NOx is absorbed into the NOx absorbent. So long as the oxygen concentration in the inflowing exhaust gas is high, the NO₂ is produced on the surface of the platinum Pt, and so long as the NOx absorption ability of the absorbent is not saturated, the NO₂ is absorbed into the absorbent and nitric acid ions NO₃⁻ are produced.

Contrary to this, when the oxygen concentration in the inflowing exhaust gas is lowered, the production of NO₂ is lowered. When the production of NO₂ is lowered, the reaction proceeds in an inverse direction (NO₃⁻ → NO₂), and thus nitric acid ions NO₃⁻ in the absorbent are released in the form of NO₂ from the absorbent. This NO₂ discharged from the absorbent reacts with the large amount of the unburnt HC and CO as shown in Fig. 8B and is reduced. In this way, when the NO₂ no longer exists on the surface of the platinum Pt, the NO₂ is successively released from the absorbent. Accordingly, when the air-fuel ratio of the inflowing exhaust gas is made rich, the NOx is released from the NOx absorbent 19 in a short time. Further NOx is not discharged to the outside air since the NOx discharged is reduced.

Even if the air-fuel ratio of the inflowing exhaust gas is made the stoichiometric air-fuel ratio, the NOx is released from the NOx absorbent. However, where the air-fuel ratio of the inflowing exhaust gas is made the stoichiometric air-fuel ratio, the NOx is released only gradually from the NOx absorbent 17, and therefore a slightly long time is required for releasing all NOx absorbed in the NOx absorbent 17.

The three-way catalyst and the NOx absorbent as well as the oxidation catalyst have oxidation actions, and therefore, as explained above, the three-way catalyst or the NOx catalyst may be used as the catalyst 25.

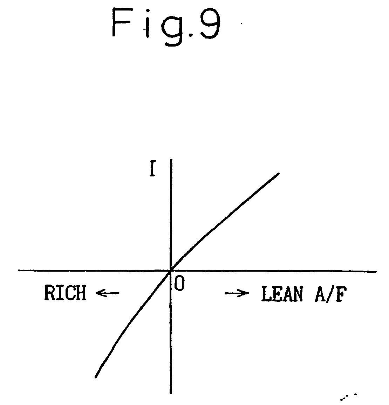

Figure 9 shows the output of the air fuel ratio sensor 27. As shown in Fig. 8, the output current I of the air fuel ratio sensor 27 changes in accordance with the air fuel ratio A/F. Therefore, it is possible to determine the air fuel ratio from the output current I of the air fuel ratio sensor 27.

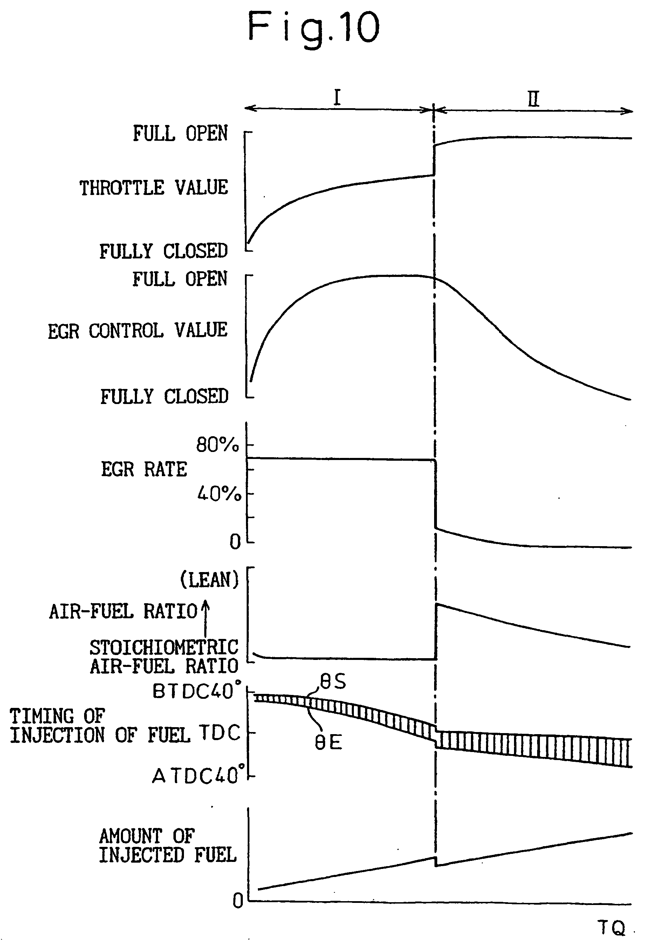

Next, referring to Fig. 10, the operation controls in the first and second operation regions I and II will be generally explained.

Fig. 10 shows the degree of the opening of the throttle valve 20, the degree of the opening of the EGR control valve 31, the EGR rate, the air fuel ratio, the injection timing, and the amount of the injected fuel, relative to the required load L. As shown in Fig. 10, in the first operation region I where the required load is low, the degree of the opening of the throttle valve 20 is gradually increased from near fully closed degree to around 2/3 degree as the required load L increases, and the degree of the opening of the EGR control valve 31 is gradually increased from near a fully closed degree to a full open degree as the required load L increases. Further, in the example shown in Fig. 10, in the first operation region I, the EGR rate is made around 70 percent, and the air fuel ratio is made lean air fuel ratio where the air fuel ratio is slightly lean.

In other words, in the first operation region, the degree of the opening of the throttle valve 20 and the EGR control valve 31 are controlled such that the EGR rate is around 70 percent and the air fuel ratio is lean air fuel ratio where the air fuel ratio is slightly lean. Note that at this time, the air fuel ratio is controlled to the target lean air fuel ratio by correcting the degree of the opening of the EGR control valve 31 on the basis of the output signal of the air fuel ratio sensor 27. Further, in the first operation region I, the fuel injection is performed before the top dead center TDC. In this case, the beginning timing of the injection is delayed as the required load becomes high, and the completion timing of the injection is also delayed as the beginning timing of the injection is delayed.

Note that in the idling operation, the throttle valve 20 is closed to near a fully closed degree, and at this time, the EGR control valve 31 is also closed to near a fully closed degree. When closing the throttle valve 20 to near the fully closed degree, the pressure in the combustion chamber 5 at the beginning of the compression becomes lower, so the compression pressure becomes low. When the compression pressure becomes low, the work of compression by the piston 4 becomes small, so the oscillation of the engine body 1 becomes small. That is, in the idling operation, in order to suppress the oscillation of the engine body 1, the throttle valve 20 is closed to near the fully closed degree.

On the other hand, when the engine operation region changes from the first operation region I to the second operation region II, the degree of the opening of the throttle valve 20 is increased in steps from around 2/3 degree of the opening toward the full open degree. At this time, in the example shown in Fig. 10, the EGR rate is reduced in steps from around 20 percent to 40 percent or less, so the air fuel ratio is increased in steps. That is, the EGR rate jumps beyond the EGR rate region (Fig. 5) where the large amount of the smoke is produced, so the large amount of the smoke is not produced when the engine operation region changes from the first operation region I to the second operation region II.

In the second operation region II, the second combustion, that is, the conventional combustion is operated. In this combustion way, the soot and NOx are produced somewhat, but the heat efficiency is higher than that in the low temperature combustion, and therefore, as shown in Fig. 10, the amount of the injected fuel is reduced in steps when the engine operation region changes from the first operation region I to the second operation region II. In this second operation region II except for a part thereof, the throttle valve 20 is maintained fully open, and the degree of the opening of the EGR control valve 31 is gradually reduced as the required load becomes large. Further, in this second operation region II, the EGR rate is reduced as the required load becomes large, and the air fuel ratio is reduced as the required load becomes large. The air fuel ratio is, however, a lean air fuel ratio even if the required load becomes large. Further, in the second operation region II, the timing of the beginning of the fuel injection θs is around the top dead center of the compression TDC.

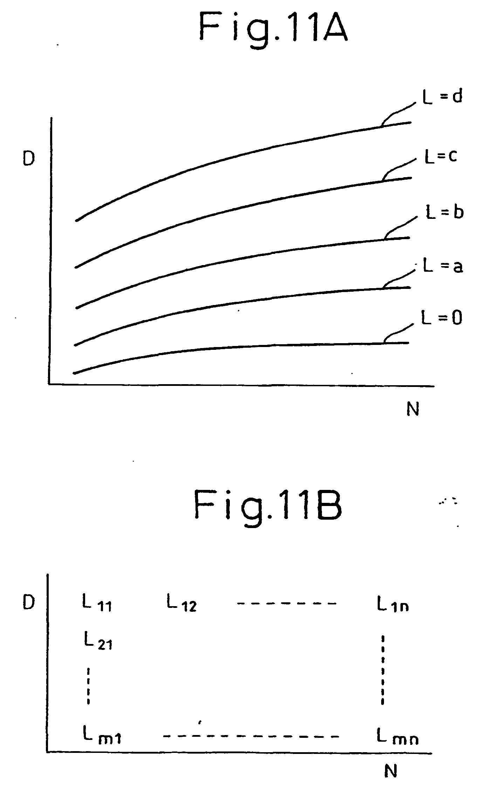

Fig. 11A shows the relationship between the required load L, the amount of the depression of the acceleration pedal D, and the engine speed N. In Fig. 11A, each curve represents a constant load line, the curve L = 0 represents that the required load is zero, and the required loads represented by the remaining curves are increased in L = a, L = b, L = c, L = d order. The required load L shown in Fig. 11A is pre-memorized in ROM 42 in the form of a map as a function of the amount of the depression of the acceleration pedal D and the engine speed N as shown in Fig. 11B. In the present invention, the required load L is first calculated according to the amount of the depression of the acceleration pedal D and the engine speed N of the map shown in Fig. 11B, and then the amount of the injected fuel and so are calculated on the basis of this required load L.

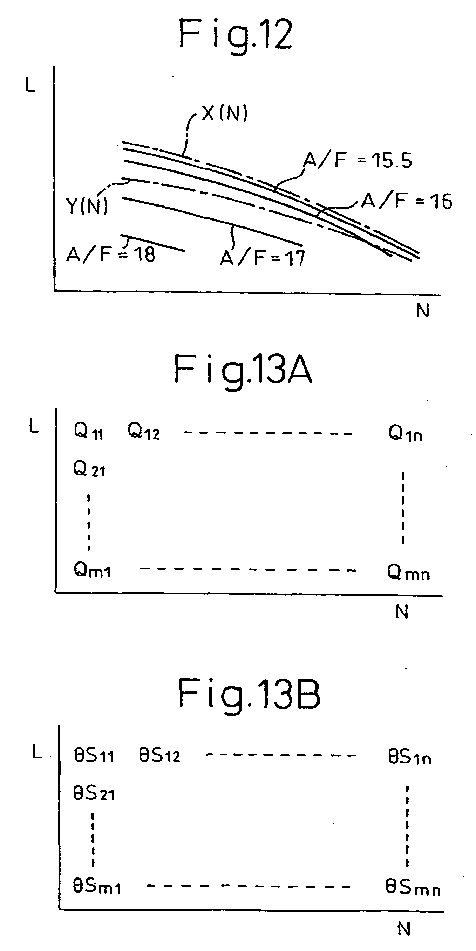

Fig. 12 shows the air fuel ratio A/F in the first operation region I after the completion of the warning up of the engine. In Fig. 12, the curves represented by A/F = 15.5, A/F = 16, A/F = 17, A/F = 18 represent the air fuel ratios of 15.5, 16, 17 and 18 respectively, and the air fuel ratio between the curves is defined by the proportional distribution. As shown in Fig. 12, in the first operation region I, the air fuel ratio is lean, and further in the first operation region I, the air fuel ratio A/F becomes lean as the required load L becomes small.

That is, the amount of the heat produced by the combustion becomes small as the required load L becomes small. Therefore, it is possible to perform the low temperature combustion even if the EGR rate is reduced as the required load L becomes small. The air fuel ratio becomes large when the air fuel ratio is reduced, and therefore, as shown in Fig. 12, the air fuel ratio is increased as the required load L becomes small. The rate of fuel consumption is increased as the air fuel ratio A/F becomes large, and therefore, in order to make the air fuel ratio as lean as possible, in the embodiment of the present invention, the air fuel ratio A/F is increased as the required load L becomes small.

Fig. 13A shows the amount of the injected fuel Q in the first operation region I, and Fig. 13B shows the timing of the beginning of the fuel injection θS in the first operation region I after the completion of the warming up of the engine. As shown in Fig. 13A, the amount of the injected fuel Q in the first operation region I is pre-memorized in ROM 42 in the form of a map as a function of the required load L and the engine speed N, and as shown in Fig. 13B, the timing of the beginning of the fuel injection θS in the first operation region I is pre-memorized in ROM 42 in the form of a map as a function of the required load L and the engine speed N.

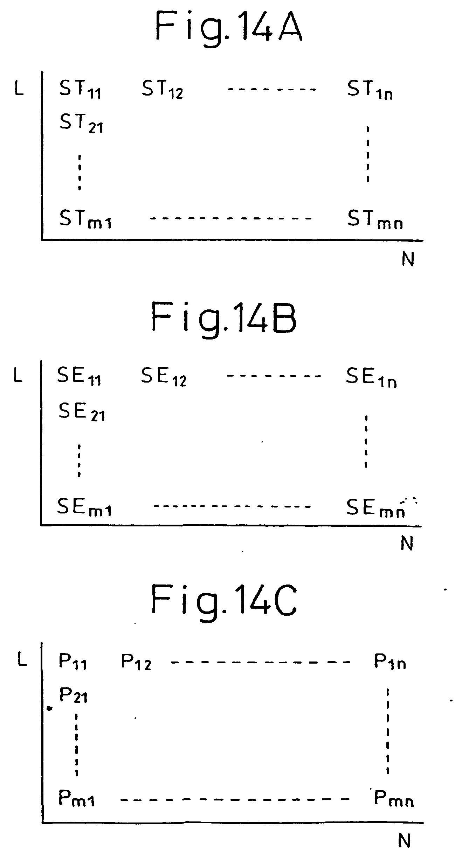

Further, the target degree of the opening ST of the throttle valve 20 necessary to make the air fuel ratio at the target air fuel ratio shown in Fig. 12 is pre-memorized in ROM 42 in the form of a map as a function of the required load L and the engine speed N as shown in Fig. 14A, and the target degree of the opening SE of the EGR control valve 31 necessary to make the air fuel ratio at the target air fuel ratio shown in Fig. 12 is pre-memorized in ROM 42 in the form of a map as a function the required load L and the engine speed N as shown in Fig. 14B.

Further, the pressure of the fuel injection, that is, the target pressure of fuel P in the common rail 34 in the first operation region I after the completion of the warming up of the engine in the embodiment of the present invention is pre-memorized in ROM 42 in the form of a map as a function of the required load L and the engine speed N as shown in Fig. 14C.

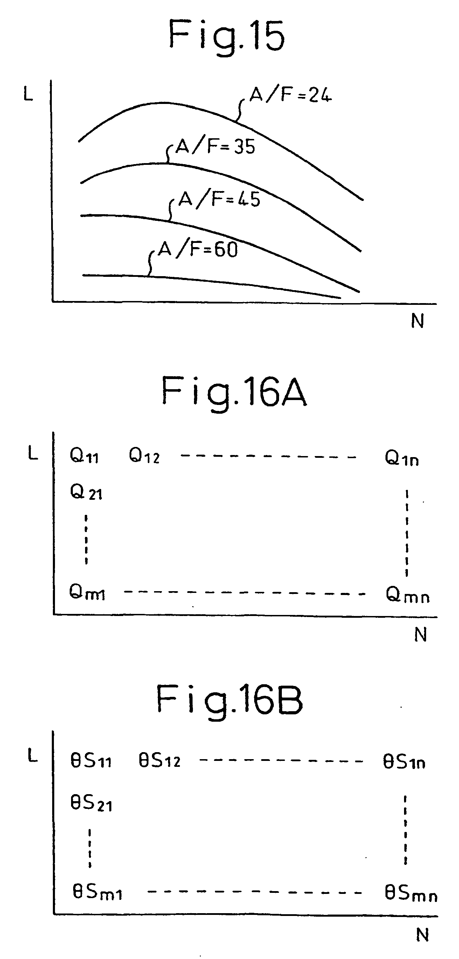

Fig. 15 shows the target air fuel ratio when the second combustion, that is, the normal combustion by the conventional combustion method is operated. Note that the curves represented by A/F = 24, A/F = 35, A/F = 45, A/F = 60 represent the target air fuel ratios 24, 35, 45, 60, respectively.

Fig. 16A shows the amount of the injected fuel Q in the second operation region II, and Fig. 16B shows the timing of the beginning of the fuel injection θS in the second operation region II. As shown in Fig. 16A, the amount of the injected fuel Q in the second operation region II is pre-memorized ROM 42 in the form of a map as a function of the required load L and the engine speed N, and as shown in Fig. 16B, the timing of the beginning of the fuel injection θS in the second operation region II is pre-memorized in ROM 42 in the form of a map as a function of the required load L and the engine speed N.

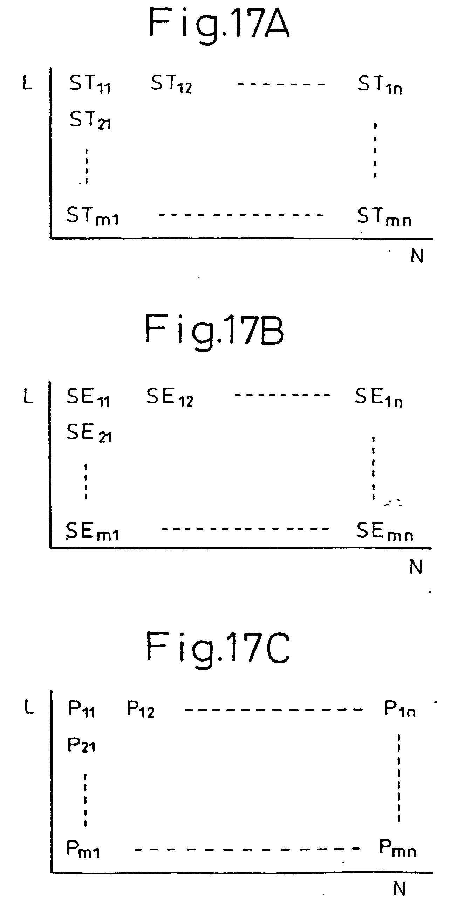

Further, the target degree of the opening ST of the throttle valve 20 necessary to make the air fuel ratio at the target air fuel ratio shown in Fig. 15 is pre-memorized in ROM 42 in the form of a map as a function of the required load L and the engine speed N as shown in Fig. 17A, and the target degree of the opening SE of the EGR control valve 31 necessary to make the air fuel ratio at the target air fuel ratio shown in Fig. 15 is pre-memorized in ROM 42 in the form of a map as a function of the required load L and the engine speed N as shown in Fig. 17B.

Further, in the embodiment of the present invention, the pressure of the fuel injection, that is, the target pressure of the fuel P in the common rail 34 in the second operation region II is pre-memorized in ROM 42 in the form of a map as a function of the required load L and the engine speed N as shown in Fig. 17C.

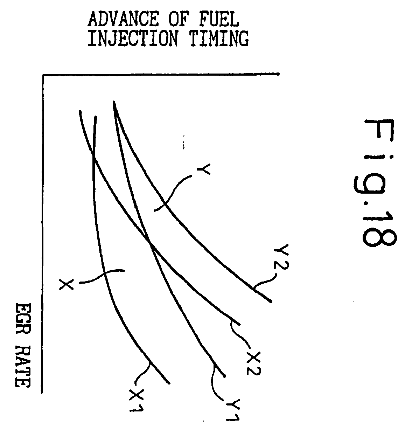

Fig. 18 shows the relationship between the advance of the fuel injection timing and the EGR rate where it is possible to better perform the low temperature combustion. That is, in Fig. 18, the region below the curve X1 represents a misfire region where a misfire is occurred after the warming up of the engine is completed, the region above the curve X2 represents a smoke region where the smoke is produced after the warming up of the engine is completed, and the region enclosed by the curves X1 and X2 represents a suitable region where it is possible to better perform the low temperatures combustion after the warming up of the engine is completed.

Further, in Fig. 18, the region below the curve Y1 represents a misfire region where a misfire is occurred before the warming up of the engine is completed, the region above the curve Y2 represents a smoke region where the smoke is produced before the warming up of the engine is completed, and the region enclosed by the curves Y1 and Y2 represents a suitable region where it is possible to better perform the low temperature combustion before the warming up of the engine is completed.

The temperature of the engine before the warming up of the engine is lower than that after warming up of the engine, and therefore, the temperature of the air compressed in the combustion chamber 5 is low, so the combustion is difficult. At this time, if the EGR rate is reduced to increase the amount of the air around the fuel, a better combustion is obtained. Therefore, it is understood from Fig. 18 that the suitable region Y before the warming up of the engine is completed is on the lower EGR rate side compared to the suitable region X after the warming up of the engine is completed.

Further, unless the timing of the fuel injection is advanced as the temperature of the compressed air is low, the injected fuel is not sufficiently evaporated, and therefore, it is understood from Fig. 18 that the suitable region Y before the warming up of the engine is completed is on the advanced fuel injection timing side compared to the suitable region X after the warming up of the engine is completed.

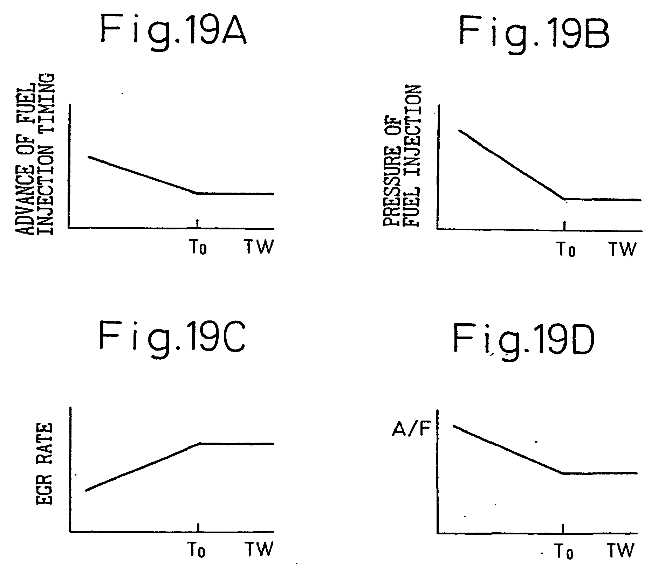

Thus, according to the present invention, as shown in Figs. 19A, the fuel injection timing is advanced as the temperature of the cooling water of the engine Tw is low, or as shown in Fig. 19C, the EGR rate is reduced as the temperature of the cooling water of the engine Tw is low, or the fuel injection timing is advanced and the EGR rate is reduced as the temperature of the cooling water of the engine Tw is low. In Fig. 19A - 19D, To represents the temperature of the cooling water at which it is judged that the warming up of the engine is completed.

Concretely, the optimal value of the timing of the beginning of the fuel injection θS at several temperatures of the cooling water of the engine lower than To is pre-memorized in ROM 42 in the form of a map shown in Fig. 13B as a function of the required load L and the engine speed N, and before the warming up of the engine is completed, the optimal value of the timing of the beginning of the fuel injection θS is calculated by the interpolation from these maps or the basis of the temperature of the cooling water of the engine Tw.

Similarly, the target degree of the opening ST of the throttle valve 20 and the target degree of the opening SE of the EGR control valve 31 necessary to make the EGR rate the optimal value at several temperatures of the cooling water of the engine Tw lower than To are pre-memorized in ROM 42 in the form of maps shown in Figs. 14A and 14B as a function of the required load L and the engine speed N, and the target degrees of the opening of the throttle valve 20 and the EGR control valve 31 to make the EGR rate optimal is calculated by the interpolation from these maps on the basis of the temperature of the cooling water of the engine Tw before the warming up of the engine is completed.

Further, when increasing the pressure of the fuel in the common rail 34, that is, the pressure of the fuel injection, the period for injecting the fuel becomes short, so the same effect as that in the advance of the fuel injection timing is occurred. Therefore, instead of advancing the fuel injection timing, as shown in Fig. 19B, it is alternative to increase the target pressure of the fuel in the common rail 34 as the temperature of the cooling water of the engine Tw is low.

In this case, the target pressure of the fuel P in the common rail 34 at several temperatures of the cooling water Tw lower than To is memorized in ROM 42 in the form of a map shown in Fig. 14C as a function of the required load L and the engine speed N, and the target pressure of the fuel in the common rail 34 is calculated by the interpolation from these maps on the basis of the temperatures of the cooling water of the engine Tw before the warming up of the engine is completed.

Further, when the air fuel ratio is increased, the amount of the air around the fuel, so the combustion is easily occurred. Therefore, as shown in Fig. 19D, it is possible to increase the air fuel ratio A/F as the temperature of the cooling water of the engine Tw is low.

In this case, the target degrees of the opening of the throttle valve 20 and the EGR control valve 31 necessary to make the air fuel ratio at the optimal value at several temperatures of the cooling water Tw lower than To are memorized in ROM 42 in the form of maps shown in Figs. 14A and 14B as a function of the required load L and the engine speed N, and the target degree of the opening of the throttle valve 20 and the EGR control valve 31 to make the air fuel ratio optimal are calculated by the interpolation from these maps on the basis of the temperature of the cooling water of the engine Tw before the warming up of the engine is completed.

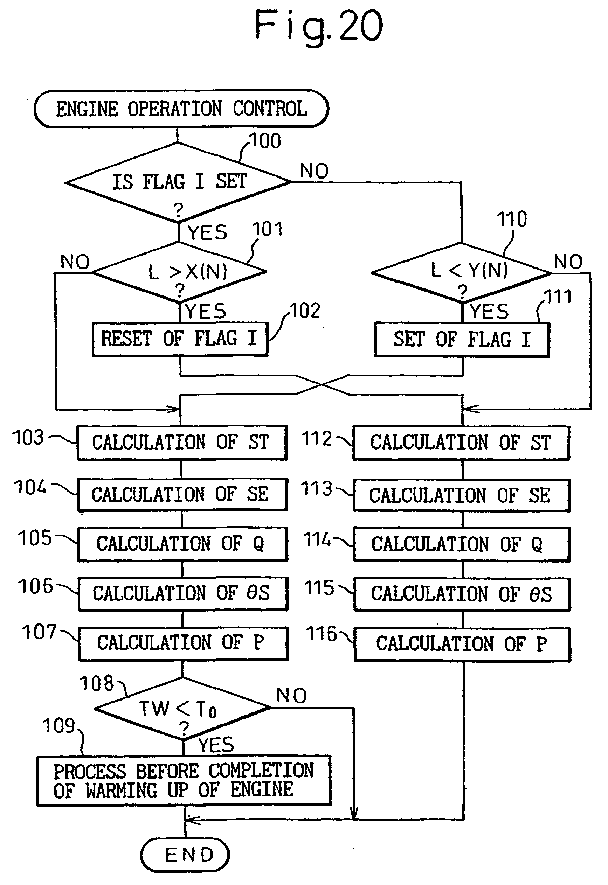

Referring to Fig. 20, the engine operation control will be explained.

Referring to Fig. 20, at first, at step 100, it is judged it the flag I is set. The flag I represents that the engine operation state is in the first operation region I. When the flag I is set, that is, when the engine operation state is in the first operation region I, the routine proceeds to step 101 where it is judged if the required load L becomes larger than the first boundary X1(N). When TQ ≦ X1(N), the routine proceeds to step 102 where the low temperature combustion is performed.

That is, at step 103, the target degree of the opening ST of the throttle valve 20 is calculated from the map shown in Fig. 14A. Next, at step 104, the target degree of the opening SE of the EGR control valve 31 is calculated from the map shown in Fig. 14B. Next, at step 105, the amount of the injected fuel Q is calculated from the map shown in Fig. 13A. Next, at step 106, the timing of the beginning of the fuel injection θs is calculated from the map shown in Fig. 13B. Next, at step 107, the target pressure of the fuel in the common rail 34, that is, the pressure of the fuel injection P is calculated from the map shown in Fig. 14C.

Next, at step 108, it is judged if the temperature of the cooling water of the engine Tw detected by the temperature sensor 37 is lower than To. When Tw > To, the processing cycle is ended. On the other hand, when TW ≦ To, the routine proceeds to step 109 where, by the above explained method, on the basis of the temperature of the cooling water of the engine Tw, the timing of the beginning of the fuel injection is advanced, or the pressure of the fuel injection is increased, or the EGR rate is reduced, or the air fuel ratio is increased.

On the other hand, at step 101, when it is judged that TQ > X(N), the routine proceeds to step 102 where the flag I is reset, and the routine proceeds to step 112 where the second combustion is performed.

That is, at step 112, the target degree of the opening ST of the throttle valve 20 is calculated from the map shown in Fig. 17A. Next, at step 113, the target degree of the opening SE of the EGR control valve 31 is calculated from the map shown in Fig. 16B. Next, at step 114, the amount of the injected fuel Q is calculated from the map shown in Fig. 16A. Next, at step 115, the timing of the beginning of the fuel injection θS is calculated from the map shown in Fig. 16B. Next, at step 116, the target pressure of the fuel in the common rail 34, that is, the pressure of the fuel injection P is calculated from the map shown in Fig. 17C.

When the flag I is reset, in the next processing cycle, the routine proceeds from step 100 to step 110 where it.is judged if the required load L becomes lower than the second boundary Y(N). When L ≧ Y(N), the routine proceeds to step 112, and the second combustion is performed under the lean air fuel ratio. On the other hand, when it is judged that L < Y(N) at step 110, the routine proceeds to step 111 where the flag I is set, and the routine proceeds to step 103 where the low temperature combustion is performed.

Below, the second embodiment of the present invention will be explained.

In the above-explained combustion system, the hydrocarbons, the growth of which stops midway before the hydrocarbons become soot, are purified by the after-treatment using the oxidation catalyst and so. However, for example, when the temperature of the oxidation catalyst is lower than the temperature at which the oxidation catalyst can purify the hydrocarbons, that is, the activated temperature, the oxidation catalyst cannot purify the hydrocarbons. Therefore, according to the second embodiment, a system which can completely purify the hydrocarbons is provided.

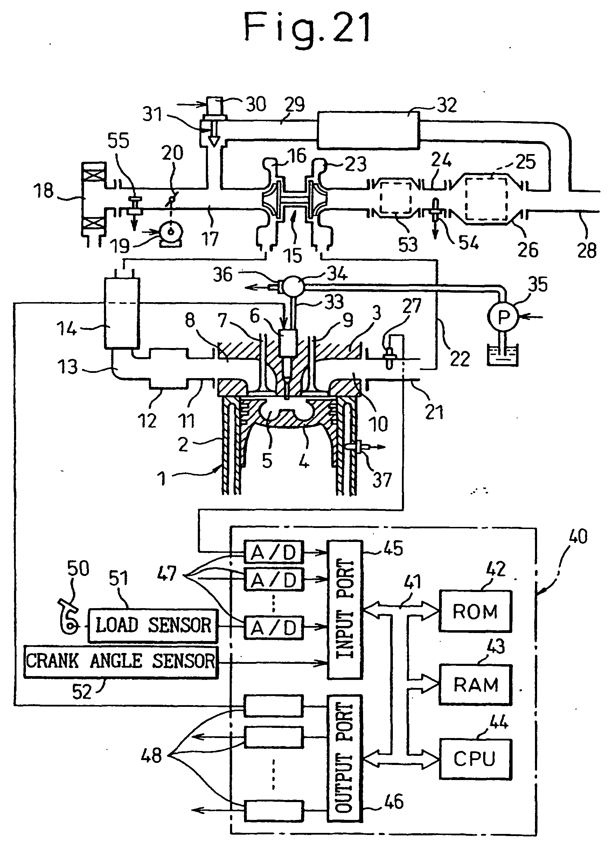

Referring to Fig. 21, a hydrocarbon (HC) adsorbent 53 for adsorbing the unburnt hydrocarbons in the exhaust gas is arranged in the exhaust tube 24 upstream of the NOx absorbent 25. The HC adsorbent 53 can adsorb the hydrocarbons at a temperature lower than the temperature at which the NOx absorbent can absorb NOx, that is, the activated temperature.

As explained above, the NOx absorbent 25 comprises a precious metal such as platinum Pt, and therefore, has an oxidation action. By the way, as also explained above, when the engine operation state is in the first operation region I, and the low temperature combustion is performed, almost no soot is produced and, instead, the unburnt hydrocarbons are discharged from the combustion chamber 5 in the form of soot precursor or a hydrocarbon which is a precursor to soot precursor. Only when the temperature of the NOx absorbent 25 is higher than a predetermined temperature, that is, its activated temperature, can the NOx absorbent 25 offer its oxidation action, and therefore, only when the temperature of the NOx absorbent 25 is higher than its activated temperature, are the unburnt hydrocarbons discharged from the combustion chamber 5 better oxidized by the NOx absorbent 25. However, when the engine starts to operate, and is in the idling engine operation, and therefore, it is preferable to perform the low temperature combustion, the temperature of the NOx absorbent 25 is lower than its activated temperature, so the NOx absorbent 25 cannot purify the unburnt hydrocarbons. However, even when the temperature of the HC adsorbent 53 is lower than the activated temperature of the NOx absorbent 25, the HC adsorbent 53 arranged upstream of the NOx absorbent 25 can adsorb the unburnt hydrocarbons. That is, the HC adsorbent 25 can maintain the unburnt hydrocarbons adsorbed thereon until the temperature of the NOx absorbent 25 becomes higher than its activated temperature. Therefore, according to the embodiment, if the low temperature combustion is performed when the temperature of the NOx absorbent 25 is lower than its activated temperature, such as when the engine operation is in the idling engine operation, no unburnt hydrocarbons are discharged downstream from the NOx absorbent 25. Note that the unburnt hydrocarbons adsorbed on the HC adsorbent 53 react with much of the oxygen included in the exhaust gas and are eliminated from the HC adsorbent 53 when the first combustion, that is, the low temperature combustion, charges to the second combustion, that is, conventional combustion.

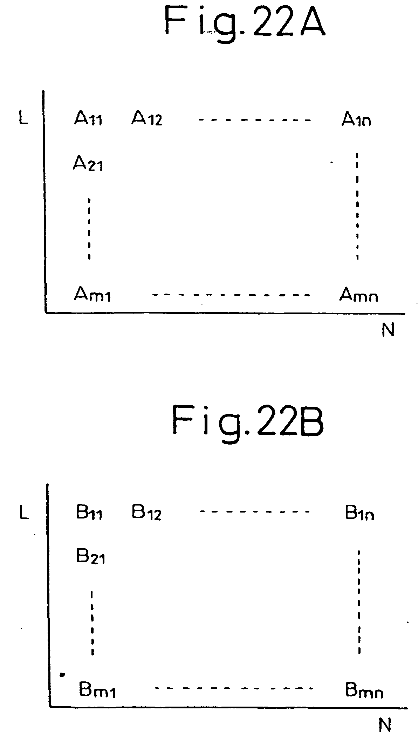

By the way, the ability of the NOx absorbent 25 to absorb the NOx is limited, and therefore, it is necessary to discharge the NOx from the NOx absorbent 25 before the ability of the NOx absorbent 25 to adsorb the NOx is saturated. For this end, it is necessary to estimate the amount of the NOx absorbent in the NOx absorbent 25. According to the embodiment of the present invention, the amount of the absorbed NOx per unit time A when the first combustion is performed is pre-memorized in ROM 42 in the form of a map shown in Fig. 22A as a function of the required load L and the engine speed N, the amount of the absorbed NOx per unit time B when the second combustion is performed is pre-memorized in ROM 42 in the form of a map shown in Fig. 22B as a function of the required load L and the engine speed N, and the amount of the NOx ΣNOX absorbed on the NOx absorbent 25 is estimated by integrating the amounts of the absorbed NOx per unit A and B.

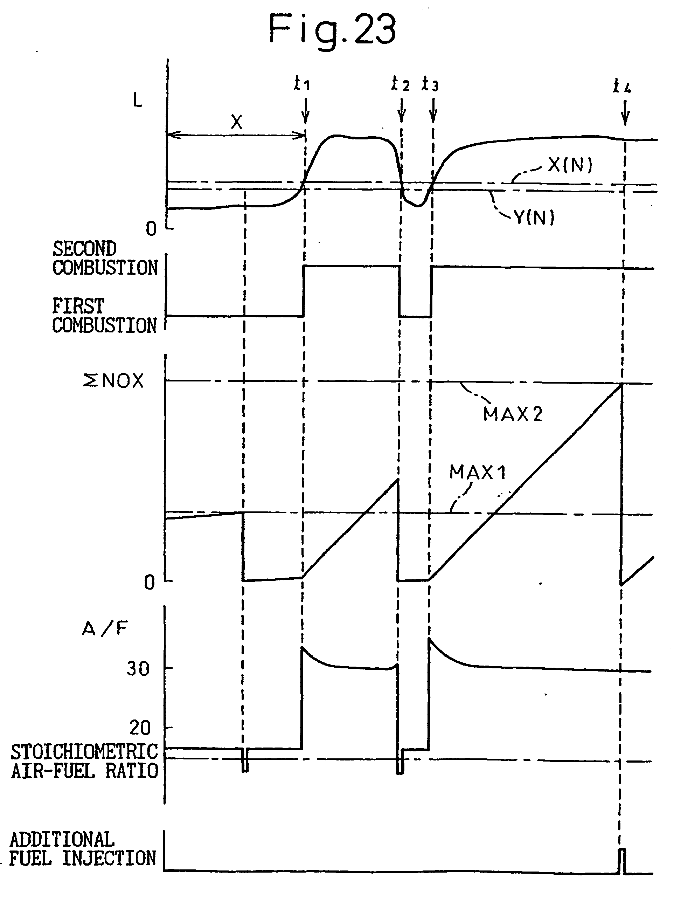

In this embodiment of the present invention, when the amount of the absorbed NOx INOX exceeds a predetermined allowable maximum value, the NOx is discharged from the NOx absorbent 25. Below, this will be explained by referring to Fig. 23.

Referring to Fig. 23, in the embodiment of the present invention, two allowable maximum values, that is, an allowable maximum value MAX 1 and an allowable maximum value MAX 2 are set. The allowable maximum value MAX 1 is around 30 percent of the maximum amount of the absorbed NOx which the NOx absorbent 25 can absorb, and the allowable maximum value MAX 2 is around 80 percent of the maximum amount of the absorbed NOx which the NOx absorbent 25 can absorb. When the first combustion is performed and the amount of the absorbed NOx ∑NOX exceeds the allowable maximum value MAX 1, the air fuel ratio is made rich to discharge the NOx from the NOx absorbent 25. When the second combustion is performed and the amount of the absorbed NOx ∑NOX exceeds the allowable maximum value MAX 1, the air fuel ratio is made rich to discharge the NOx from the NOx absorbent 25 at the same time as the engine operation changing from the second combustion to the first combustion. When the second combustion is performed and the amount of the absorbed NOx INOX exceeds the allowable maximum value MAX 2, additional fuel is injected to discharge the NOx from the NOx absorbent 25 during the latter half of the combustion stroke, or during the exhaust stroke.

That is, in Fig. 23, the term X is a term which the required load L is lower than the first boundary X(N) and the first combustion is performed, and at this time the air fuel ratio is a lean air fuel ratio which is slightly lean than the stoichiometric air fuel ratio. When the first combustion is performed, the amount of the NOx produced is extremely small, and therefore, at this time, as shown in Fig. 23, the amount of the absorbed NOx INOX is extremely slowly raised. When the first combustion is performed and the amount of the absorbed NOx ∑NOX exceeds the allowable maximum value MAX 1, the air fuel ratio A/F is temporarily made rich, and thereby the NOx is discharged from the NOx absorbent 25. At this time, the amount of the absorbed NOx INOX is made zero.

As explained above, when the first combustion is performed, no soot is produced even if the air fuel ratio is lean, or stoichiometric air fuel ratio, or rich, and therefore no soot is produced even if the air fuel ratio A/F is made rich to discharge the NOx from the NOx absorbent 25 when the first combustion is performed.

Next, when the required load L exceeds the first boundary X(N) at time t₁, the operation is changed from the first combustion to the second combustion. As shown in Fig. 23, when the second combustion is performed, the air fuel ratio A/F becomes considerably lean. When the second combustion is performed, the amount of the NOx produced is larger than that when the first combustion is performed, and therefore, when the second combustion is performed, the amount of the absorbed NOx is relatively rapidly raised.

If the air fuel ratio A/F is made rich when the second combustion is performed, a large amount of soot is produced, so it is not allowable to make the air fuel ratio A/F rich when the second combustion is performed. Therefore, as shown in Fig. 23, even if the amount of the absorbed NOx ∑NOX exceeds the allowable maximum value MAX 1 when the second combustion is performed, the air fuel ratio A/F is not made rich to discharged the NOx from the NOx absorbent 25. In this case, as shown in Fig. 23, at time t₂ when the required load L becomes lower than the second boundary Y(N) and the engine operation is changed from the second combustion to the first combustion, the air fuel ratio is made rich to discharge the NOx from the NOx absorbent 25.

Next, at time t₃ in Fig. 23, the engine operation is changed from the first combustion to the second combustion, and thereafter the second combustion has been performed for a while. When the amount of the absorbed NOx ΣNOX exceeds the allowable maximum value MAX 1, and thereafter exceeds the allowable maximum value MAX 2 at time t₄, the additional fuel is injected during the latter half of the combustion stroke, or during the exhaust stroke to make the air fuel ratio of the exhaust gas flowing into the NOx absorbent 25 to discharge the NOx from the NOx absorbent 25.

The additional fuel injected during the latter of the combustion stroke or during the exhaust stroke does not contribute to the generation of the output of the engine, so it is preferable to reduce the number of the injections of the additional fuel as possible. Therefore, when the second combustion is performed and the amount of the absorbed NOx INOX exceeds the allowable maximum value MAX 1, the air fuel ratio A/F is temporarily made rich at the same time as the changing of the engine operation from the second combustion to first combustion, and only when the amount of the absorbed NOx ∑Nox exceeds the allowable maximum value MAX 2, is the additional fuel injected.

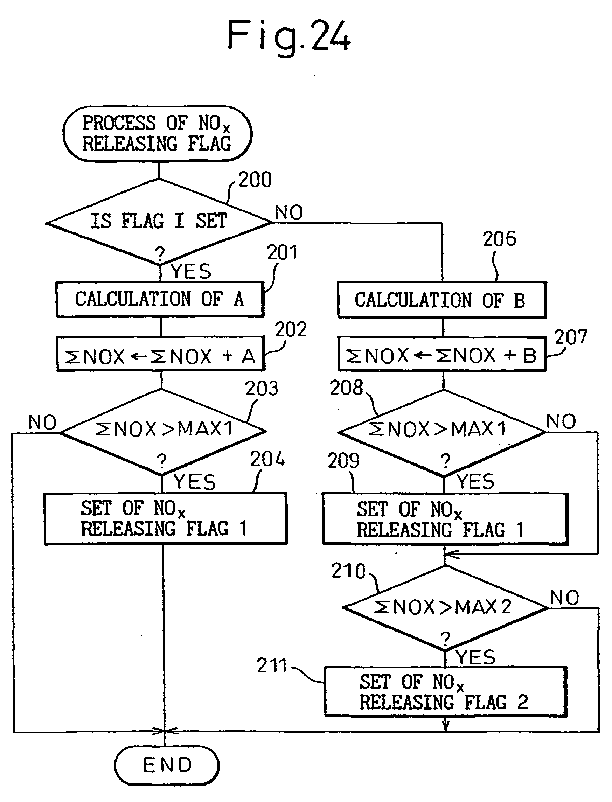

Fig. 24 shows a processing routine of the NOx discharging flag which is set when the NOx should be discharged from the NOx absorbent 25, this routine being executed by interruption every predetermined time period.

Referring to Fig. 24, first at step 200, it is judged if the flag I which indicates that the engine operation is in the first operation region I is set. When the flag I is set, that is, the engine operation is in the first operation region I, the routine proceeds to step 201 where the amount of the absorbed NOx per unit time A is calculated from the map shown in Fig. 22A. Next, at step 202, A is added to the amount of the absorbed NOx ΣNOX. Next, at step 203, it is judged if the amount of the absorbed NOx ΣNOX exceeds the allowable maximum value MAX 1. When ΣNOX > MAX 1, the routine proceeds to step 204 where the NOx discharging flag I which indicates that the NOx should be discharged when the first combustion is performed is set.

On the other hand, when it is judged that the flag I is reset at step 200, that is, the engine operation is in the second operation region II, the routine proceeds to step 206 where the amount of the absorbed NOx per unit time B is calculated from the map shown in Fig. 22B. Next, at step 207, B is added to the amount of the absorbed NOx ∑NOX. Next, at step 208, it is judged if the amount of the absorbed NOx exceeds the allowable maximum value MAX 1. When ΣNOX > MAX 1, the routine proceeds to step 209 where the NOx discharging flag I which indicates that the NOx should be discharged when the engine operation is changed from the second combustion to the first combustion.

At step 210, it is judged if the amount of the absorbed NOx ∑NOX exceeds the allowable maximum value MAX 2. When ∑NOX > MAX 2, the routine proceeds to step 211 where the NOx discharging flag 2 which indicates that the NOx should be discharged during the latter half of the combustion stroke or during the exhaust stroke.

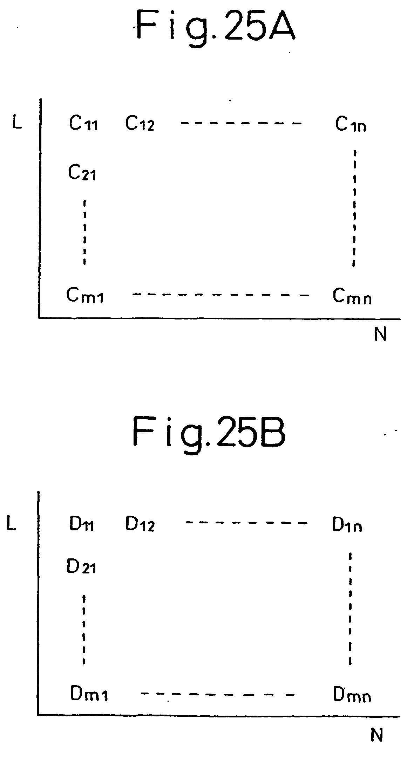

By the way, the amount of the hydrocarbons which the HC adsorbent 53 can adsorb is limited. According to the embodiment of the present invention, the amount of the adsorbed hydrocarbons per unit time C when the first combustion is performed is pre-memorized in ROM 42 in the form of a map as shown in Fig. 25A as a function of the required load L and the engine speed N. Further, the amount of the adsorbed hydrocarbons per unit time D when the second combustion is performed is pre-memorized in ROM 42 in the form of a map as shown in Fig. 25B as a function of the required load L and the engine speed N. The amount of the hydrocarbons adsorbed on the HC adsorbent 53 is estimated by integrating the amounts of the adsorbed hydrocarbons per unit time C and D.

In the embodiment of the present invention, when the first combustion is performed and the amount of the hydrocarbons adsorbed on the HC adsorbent 53 exceeds a maximum value, the first combustion is charged to the second combustion to eliminate the hydrocarbons from the HC adsorbent 53. In the second combustion, the exhaust gas, the air fuel ratio of which is considerably lean, flows into the HC adsorbent 53. Therefore, the hydrocarbons adsorbed on the HC adsorbent 53 react with the excess oxygen in the exhaust gas, and are eliminated from the HC adsorbent 53.

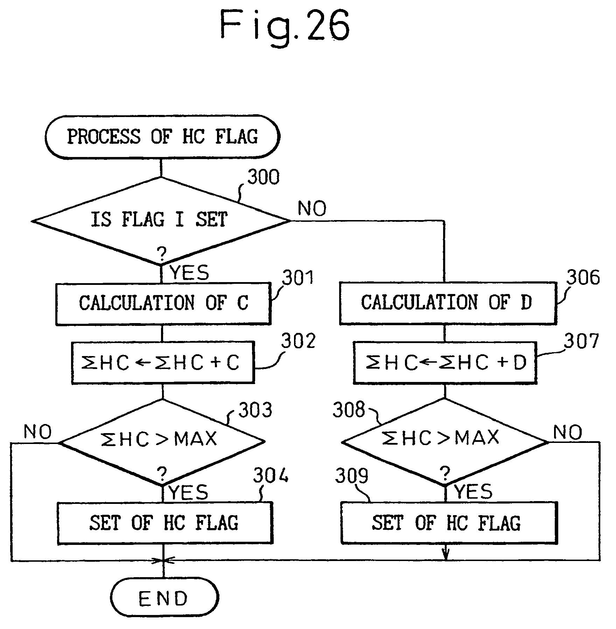

Fig. 26 shows a processing routine of a HC flag which is set when the hydrocarbons should be eliminated from the HC adsorbent 53, this routine being executed by interruption every predetermined time period.

Referring to Fig. 26, first at step 300, it is judged if the flag I which indicates that the engine operation is in the first operation region I is set. When the flag I is set, that is, the engine operation is in the first operation region I, the routine proceeds to step 301 where the amount of the adsorbed hydrocarbons per unit C is calculated from the map shown in Fig. 25A. Next, at step 302, C is added to the amount of the adsorbed hydrocarbons ΣHC. Next, at step 303, it is judged if the amount of the adsorbed hydrocarbons ΣHC exceeds an allowable maximum value MAX. When ΣHC > MAX, the routine proceeds to step 104 where the HC flag is set.

On the other hand, when it is judged that the flag I is reset at step 300, that is, the engine operation is in the second operation region I, the routine proceeds to step 306 where the amount of the adsorbed hydrocarbons per unit time D is calculated from the map shown in Fig. 25B. Next, at step 307, D is added to the amount of the adsorbed hydrocarbons ∑HC. Next, at step 308, it is judged if the amount of the adsorbed hydrocarbons ∑HC exceeds the allowable maximum value MAX. When ∑HC > MAX, the routine proceeds to step 309 where the HC flag is set.

By the way, a temperature sensor 54 for detecting the temperature of the exhaust gas is arranged in the exhaust passage 24 between the HC adsorbent 53 and the NOx absorbent 25. The output voltage of the temperature sensor 54 is input through the corresponding AD converter 47 into the input port 45. In this embodiment, the temperature of the NOx absorbent 25 is estimated from the temperature of the exhaust gas detected by the temperature sensor 54. When the temperature of the NOx absorbent 25 is lower than the activated temperature of the NOx absorbent, and the low temperature combustion where the temperature of the exhaust gas is relatively low is performed, the engine operation is controlled to raise the temperature of the NOx absorbent 25. That is, the timing of the fuel injection into the combustion chamber 5 is delayed. Thereby, the temperature of the exhaust gas is raised, and the temperature of the NOx absorbent 25 is raised.

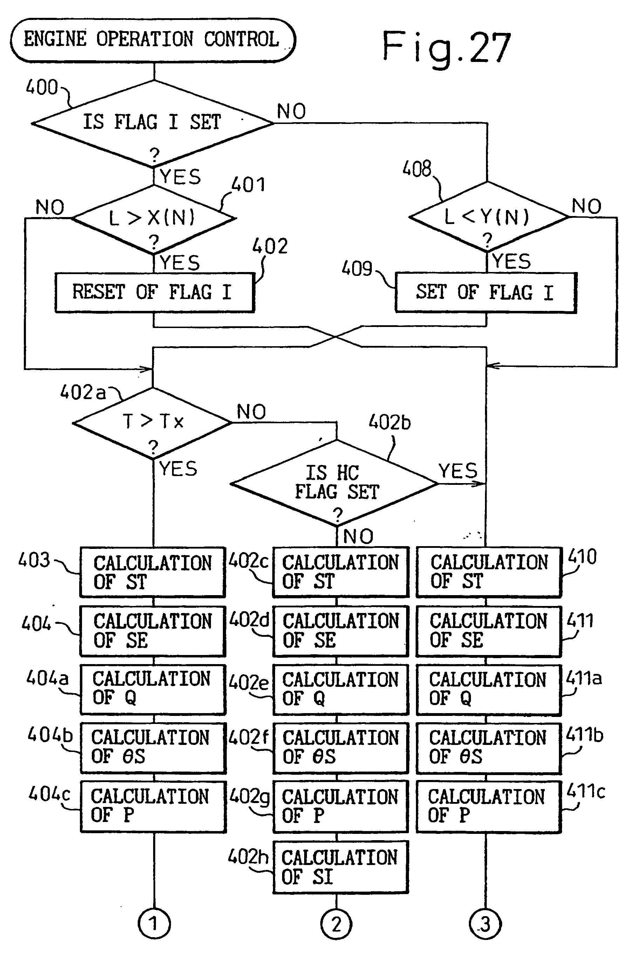

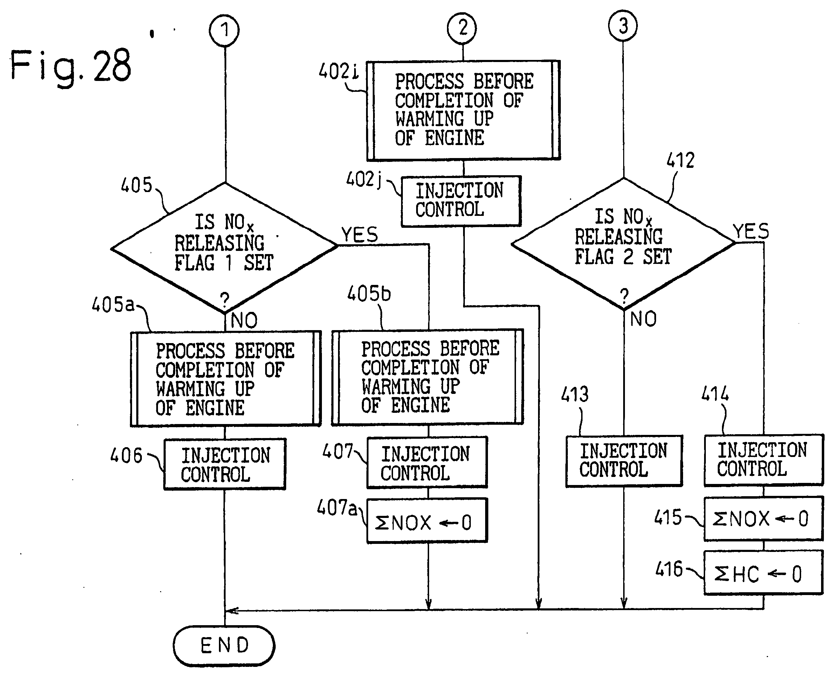

Below, the engine operation control will be explained, referring to Figs. 27 and 28.

Referring to Fig. 27, first at step 400, it is judged if the flag which indicates that the engine operation 15 in the first operation region I is set. When the flag I is set, that is, the engine operation is in the first engine operation, the routine proceeds to step 401 where it is judged if the required load L is larger than the first boundary X1(N). When L ≦ X1(N), the routine proceeds to step 402a.

At step 402a, it is judged if the temperature T of the NOx absorbent 25 is higher than a predetermined temperature, that is, a temperature Tx at which the NOx absorbent 25 can absorb or discharge the NOx. When T > Tx at step 402a, the routine proceeds to step 403 where the low temperature combustion is performed.

That is, at step 403, the target degree of the opening ST of the throttle valve 20 is calculated from the map shown in Fig. 14A. Next, at step 404, the target degree of the opening SE of the EGR control valve 31 is calculated from the map shown in Fig. 14B. Next, at step 404a, the amount of the injected fuel Q is calculated from the map shown in Fig. 13A. Next, at step 404b, the timing of the beginning of the fuel injection θS is calculated from the map shown in Fig. 13B. Next, at step 404c, the target pressure of the fuel in the common rail 34, that is, the pressure of the fuel injection P is calculated from the map shown in Fig. 14C.

Next, at step 405, it is judged if the Nox discharging flag 1 is set. When the NOx discharging flag 1 is reset, the routine proceeds to step 405a where the process before the warming up of the engine is completed is executed as explained below in detail. Next, at step 406, the injection control is executed to actually inject the fuel into the combustion chamber 5. At this time, the low temperature combustion is performed under the lean air fuel ratio.

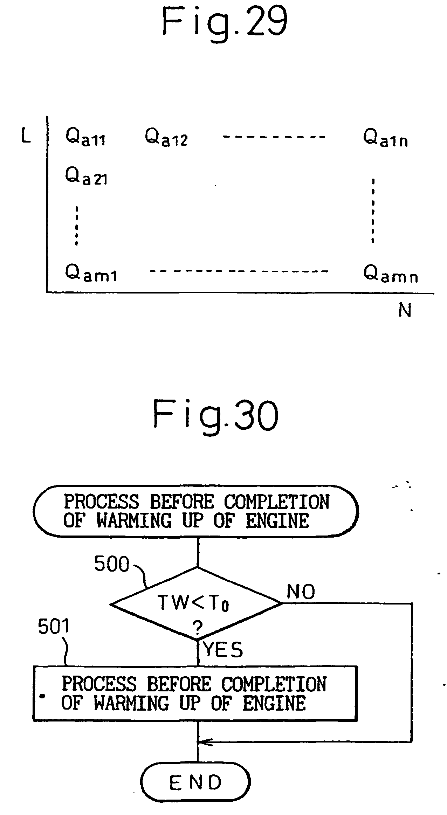

On the other hand, when the NOx discharging flag 1 is set, the routine proceeds to step 405b where the process before the warming up of the engine is completed is executed as explained below in detail. Next, at step 407, the injection control is executed to actually inject the fuel into the combustion chamber 5. At this time, the amount of the fuel calculated by adding an increase Qa calculated from a map shown in Fig. 29 to the amount Q calculated at step 404a is injected to make the mean air fuel ratio in the combustion chamber 5 rich. Thereby, the NOx is discharged from the NOx absorbent 25. Next, at step 407a, INOX is made zero.

When T ≤ Tx at step 402a, the routine proceeds to step 402b where it is judged if the HC flag is set. At step 402a, when the HC flag is reset, the routine proceeds to step 402c where the low temperature combustion is performed. That is, at step 402c, the target degree of the opening ST of the throttle valve 20 is calculated from the map shown in Fig. 14A. Next, at step 402d, the target degree of the opening SE of the EGR control valve 31 is calculated from the map shown in Fig. 14B. Next, at step 402e, the amount of the injected fuel Q is calculated from the map shown in Fig. 13A. Next, at step 402f, the timing of the beginning of the fuel injection θs is calculated from the map shown in Fig. 13B. Next, at step 402g, the target pressure of the fuel in the common rail 34, that is, the pressure of the fuel injection P is calculated from the map shown in Fig. 14C.

Next, at step 402h, the timing of the beginning of the fuel injection SI of the injection 6 is corrected, that is, delayed.

Next, at step 402i, the process before the warming up of the engine is completed is executed as explained below in detail. Next, at step 402j, the injection control is executed to actually inject the fuel into the combustion chamber 5. At this time, the low temperature combustion is performed under the lean air fuel ratio.

At step 401, when it is judged that L > X(N), the routine proceeds to step 402 where the flag I is reset, and then the routine proceeds to step 410 where the second combustion is performed. Also when it is judged that the HC flag is set step 402b, the routine proceeds to step 410 where the second combustion is performed.

That is, at step 410, the target degree of the opening ST of the throttle valve 20 is calculated from the map shown in Fig. 17A. Next, at step 411, the target degree of the opening SE of the EGR control valve 31 is calculated from the map shown in Fig. 17B. Next, at step 411a, the amount of the injected fuel Q is calculated from the map shown in Fig. 16A. Next, at step 411b, the timing of the beginning of the fuel injection θS is calculated from the map shown in Fig. 16B. Next, at step 411c, the target pressure of the fuel in the common rail 34, that is, the pressure of the fuel injection P is calculated from the map shown in Fig. 17c.

Next, at step 412, it is judged if the NOx discharging flag 2 is set. When the NOx discharging flag 2 is reset, the routine proceeds to step 413 where the injection control is executed to actually inject the fuel into the combustion chamber 5. At this time, the second combustion is performed under the lean air fuel ratio.

On the other hand, at step 412, when the NOx discharging flag 2 is set, the routine proceeds to step 414 where the injection control is executed to actually inject the fuel into the combustion chamber 5. At this time, the additional fuel is injected during the latter half of the combustion stroke or during the exhaust stroke to make the air fuel ratio of the exhaust gas flowing into the NOx absorbent 25 rids. Thereby, the NOx is discharged from the NOx absorbent 25. Next, at step 415, INOX is made zero. Next, at step 416, ΣHC is made zero.

When the flag I is reset, in the next processing cycle, the routine proceeds from step 400 to step 408 where it is judged if the required load L becomes lower than the second boundary Y(N). When L ≧ Y(N), the routine proceeds to step 410. On the other hand, when it is judged that L < Y(N) at step 408, the routine proceeds to step 409 where the flag 2 is set, and the routine proceeds to step 402a.

Referring to Fig. 30, the process before the completion of the warming up of the engine of steps 405a, and 405b and 402i in Fig. 28 will be explained below.

Referring to Fig. 30, first at step 500, it is judged if the temperature of the cooling water of the engine Tw detected by the temperature sensor 37 is lower than To. When Tw > To, the processing cycle is ended. On the other hand, when Tw ≦ To, the routine proceeds to step 501 where by the above explained way, on the basis of the temperature of the cooling water of the engine Tw, the timing of the beginning of the fuel injection is advanced, or the pressure of the fuel injection is increased, or the EGR rate is reduced, or the air fuel ratio is increased.

An internal combustion engine in which an amount of production of soot gradually increases and then peaks when an amount of inert gas introduced into a combustion chamber increases, wherein the amount of inert gas introduced into the combustion chamber is made larger than an amount of inert gas where the amount of production of soot peaks, means for judging if the engine is warmed up, and when the engine is warmed up, at least one control, which includes a control to make timing of fuel injection earlier than that after the warming up of the engine is completed, a control to make a pressure of fuel injection higher than that after the warming up of the engine is completed, a control to make a inert gas rate smaller than that after the warming up of the engine is completed, and a control to make an air fuel ratio larger than that after the warming up of the engine is completed, is executed. This prevents the production of soot and NOx in the combustion chamber.

## Claims

1. An internal combustion engine in which an amount of production of soot gradually increases and then peaks when an amount of inert gas introduced into a combustion chamber (5) increases, there is provided means (37) for judging if the warming up of the engine while performing a first combustion where the amount of inert gas introduced into a combustion chamber (5) is maintained larger than an amount of inert gas where the amount of production of soot peaks, is completed and, when the warming up of the engine is not completed, at least one control, including
a control to make timing of fuel injection earlier than that when the first combustion is performed after the warming up of the engine is completed,
a control to make a pressure of fuel injection higher than that when the first combustion is performed after the warming up of the engine is completed,
a control to make an inert gas rate smaller than that when the first combustion is performed after the warming up of the engine is completed,
a control to make an air fuel ratio larger than that when the first combustion is performed after the warming up of the engine is completed,
is executed while performing the first combustion during the warm-up of the engine, so as to perform better the first combustion during the warm-up of the engine.

2. An internal combustion engine as set forth in claim 1, wherein the temperatures of the fuel and the gas around the fuel at the time of combustion in the combustion chamber (5) are temperatures at which the amount of NOx in the exhaust gas becomes about 10 ppm or less.

3. An internal combustion engine as set forth in claim 1, wherein the temperatures of the fuel and the gas around the fuel at the time of combustion in the combustion chamber (5) are made lower than that at which soot is produced only when the engine load is lower than a predetermined load.

4. An internal combustion engine as set forth in claim 1, wherein the air fuel ratio in the combustion chamber (5) is made one of the stoichiometric air fuel ratio, a lean air fuel ratio slightly leaner than the stoichiometric air fuel ratio, and a rich air fuel ratio.

5. An internal combustion engine as set forth in claim 1, wherein a catalyst (25) having an oxidation action is arranged in the exhaust passage (24).

6. An internal combustion engine as set forth in claim 5, wherein the catalyst (25) is comprised of at least one of the group of an oxidation catalyst, a three-way catalyst, and an NOx absorbent.

7. An internal combustion engine as set forth in claim 1, wherein means (40) is provided for selectively switching a first combustion where the amount of the inert gas introduced into the combustion chamber (5) is larger than the amount of the inert gas where the amount of production of soot peaks and almost no soot is produced, and a second combustion where the amount of the inert gas introduced into the combustion chamber (5) is smaller than the amount of the inert gas where the amount of production of soot peaks.

8. An internal combustion engine as set forth in claim 7, wherein the region of the engine operation is divided into a first operation region (I) on the lower engine load side, and a second operation region (II) on the higher engine load side, the first combustion is performed in the first operation region, and the second operation region is performed in the second operation region.

9. An internal combustion engine as set forth in claim 1, where a hydrocarbon adsorbent (53) for adsorbing the hydrocarbons in the exhaust gas thereon is arranged in the engine exhaust passage (24).

10. An internal combustion engine as set forth in claim 9, wherein means (40) is provided for selectively switching a first combustion where the amount of the inert gas introduced into the combustion chamber is larger than the amount of the inert gas where the amount of production of soot peaks and almost no soot is produced to a second combustion where the amount of the inert gas introduced into the combustion chamber is smaller than the amount of the inert gas where the amount of production of soot peaks, and the first combustion is changed to the second combustion when the hydrocarbons adsorbed on the hydrocarbon adsorbent (53) should be eliminated when the first combustion is performed.

11. An internal combustion engine as set forth in claim 1, wherein an exhaust gas recirculation apparatus (31) is provided for recirculating the exhaust gas exhausted from the combustion chamber (5) into an engine intake passage (17), and the inert gas is comprised of the recirculated exhaust gas.

12. An internal combustion engine as set forth in claim 11, wherein the exhaust gas recirculation rate is about 55 percent or more.

13. An internal combustion engine as set forth in claim 1, wherein a NOx absorbent (25) which absorbs the NOx contained in the exhaust gas when an air fuel ratio of an inflowing exhaust gas is lean, and releases the absorbed NOx when the air fuel ratio of the inflowing exhaust gas is the stoichiometric air fuel ratio or rich is arranged in an engine exhaust passage (24).

14. An internal combustion engine as set forth in claim 13, wherein the NOx absorbent (25) has an oxidation function to oxidizing the hydrocarbons in the exhaust gas at a temperature higher than a predetermined temperature, and a timing of the fuel injection is delayed when the temperature of the NOx absorbent (25) is lower than the predetermined temperature.

15. An internal combustion engine as set forth in claim 14, wherein the air fuel ratio of the exhaust gas flowing into the NOx absorbent (25) is made one of the stoichiometric air fuel ratio and the rich air fuel ratio when the NOx should be released from the NOx absorbent (25).

## Patentansprüche

1. Brennkraftmaschine, bei der eine Erzeugungsmenge von Ruß sich allmählich erhöht und dann einen Spitzenwert zeigt, wenn eine Menge Inertgas, das in eine Brennkammer (5) eingeführt wird, sich vergrößert, wobei eine Einrichtung (37) zum Beurteilen vorgesehen ist, ob das Aufwärmen des Verbrennungsmotors während der Durchführung einer ersten Verbrennung, bei der die Menge des Inertgases, das in eine Brennkammer (5) eingeführt wird, größer als eine Menge des Inertgases gehalten wird, bei der die Erzeugungsmenge des Rußes einen Spitzenwert zeigt, abgeschlossen ist, und wenn das Aufwärmen des Verbrennungsmotors nicht abgeschlossen ist, zumindest eine Steuerung einschließlich
einer Steuerung, um die Zeitabstimmung der Kraftstoffeinspritzung früher als diejenige zu machen, wenn die erste Verbrennung durchgeführt wird, nachdem das Aufwärmen des Verbrennungsmotors abgeschlossen ist,
einer Steuerung, um einen Druck einer Kraftstoffeinspritzung höher als denjenigen zu machen, wenn die erste Verbrennung durchgeführt wird, nachdem das Aufwärmen des Verbrennungsmotors abgeschlossen wird,
einer Steuerung, um die Inertgasrate kleiner als diejenige zu machen, wenn die erste Verbrennung durchgeführt wird, nachdem das Aufwärmen des Verbrennungsmotors abgeschlossen ist,
einer Steuerung, um ein Luftkraftstoffverhältnis größer als dasjenige zu machen, wenn die erste Verbrennung durchgeführt wird, nachdem das Aufwärmen des Verbrennungsmotors abgeschlossen ist,
ausgeführt wird, während die erste Verbrennung während des Aufwärmens des Verbrennungsmotors durchgeführt wird, um die erste Verbrennung während des Aufwärmens des Verbrennungsmotors besser durchzuführen.

2. Brennkraftmaschine gemäß Anspruch 1, wobei die Temperaturen des Kraftstoffs und des Gases um den Kraftstoff zu dem Zeitpunkt der Verbrennung in der Brennkammer (5) Temperaturen sind, bei denen die Menge von NOx in dem Abgas ungefähr 10 ppm oder weniger wird.

3. Brennkraftmaschine gemäß Anspruch 1, wobei die Temperaturen des Kraftstoffs und des Gases um den Kraftstoff zu dem Zeitpunkt der Verbrennung in der Brennkammer (5) niedriger als diejenige gemacht werden, bei der Ruß erzeugt wird, nämlich nur dann, wenn die Verbrennungsmotorlast niedriger als eine vorbestimmte Last ist.

4. Brennkraftmaschine gemäß Anspruch 1, wobei das Luftkraftstoffverhältnis in der Brennkammer (5) zu einem von einem stöchiometrischen Luftkraftstoffverhältnis, einem mageren Luftkraftstoffverhältnis, das geringfügig magerer als das Luftkraftstoffverhältnis ist, und einem fetten Luftkraftstoffverhältnis gemacht wird.

5. Brennkraftmaschine gemäß Anspruch 1, wobei ein Katalysator (25) mit einer Oxidationswirkung in dem Abgasdurchgang (24) angeordnet ist.

6. Brennkraftmaschine gemäß Anspruch 5, wobei der Katalysator (25) aus zumindest einem aus der Gruppe eines Oxidationskatalysators, eines Dreiwegekatalysators und eines NOx-Absorptionsmittels besteht.

7. Brennkraftmaschine gemäß Anspruch 1, wobei eine Einrichtung (40) zum wahlweisen Umschalten einer ersten Verbrennung, bei der die Menge des Inertgases, das in die Brennkammer (5) eingeführt wird, größer als die Menge des Inertgases ist, bei der die Erzeugungsmenge von Ruß einen Spitzenwert zeigt und fast kein Ruß erzeugt wird, und einer zweite Verbrennung vorgesehen ist, bei der die Menge des Inertgases, das in die Brennkammer (5) eingeführt wird, kleiner als die Menge des Inertgases ist, bei der die Erzeugungsmenge des Rußes einen Spitzenwert zeigt.

8. Brennkraftmaschine gemäß Anspruch 7, wobei der Bereich des Verbrennungsmotorbetriebs in einen ersten Betriebsbereich (I) an der Seite einer niedrigeren Verbrennungsmotorlast und einen zweiten Betriebsbereich (II) an der Seite einer höheren Verbrennungsmotorlast geteilt ist, wobei die erste Verbrennung in dem ersten Betriebsbereich durchgeführt wird, und der zweite Betriebsbereich in dem zweiten Betriebsbereich durchgeführt wird.

9. Brennkraftmaschine gemäß Anspruch 1, wobei ein Kohlenwasserstoffadsorptionsmittel (53) zum Adsorbieren der Kohlenwasserstoffe in dem Abgas in dem Verbrennungsmotordurchgang (24) angeordnet ist.

10. Brennkraftmaschine gemäß Anspruch 9, wobei eine Einrichtung (40) zum wahlweisen Umschalten einer ersten Verbrennung, bei der die Menge des Inertgases, das in die Brennkammer eingeführt wird, größer als die Menge des Inertgases ist, bei der die Erzeugungsmenge des Rußes einen Spitzenwert zeigt und fast kein Ruß erzeugt wird, zu einer zweiten Verbrennung vorgesehen ist, bei der die Menge des Inertgases, das in die Brennkammer eingeführt wird, kleiner als die Menge des Inertgases ist, bei der die Erzeugungsmenge des Rußes einen Spitzenwert zeigt, und wobei die erste Verbrennung zu der zweiten Verbrennung geändert wird, wenn die an dem Kohlenwasserstoffadsorptionsmittel (53) adsorbierten Kohlenwasserstoffe beseitigt werden sollen, wenn die erste Verbrennung durchgeführt wird.

11. Brennkraftmaschine gemäß Anspruch 1, wobei eine Abgasrezirkulationsvorrichtung (31) zum Rezirkulieren des Abgases, das von der Brennkammer (5) ausgestoßen wird, in einen Verbrennungsmotoreinlassdurchgang (17) vorgesehen ist, und wobei das Inertgas aus dem rezirkulierten Abgas besteht.

12. Brennkraftmaschine gemäß Anspruch 11, wobei die Abgasrezirkulationsrate ungefähr 55% oder mehr beträgt.

13. Brennkraftmaschine gemäß Anspruch 1, wobei ein NOx-Absorptionsmittel (25), das das NOx absorbiert, das in dem Abgas enthalten ist, wenn ein Luftkraftstoffverhältnis eines einströmenden Abgases mager ist, und das das absorbierte NOx abgibt, wenn das Luftkraftstoffverhältnis des einströmenden Abgases das stöchiometrische Luftkraftstoffverhältnis oder fett ist, in einem Verbrennungsmotorabgasdurchgang (24) angeordnet ist.

14. Brennkraftmaschine gemäß Anspruch 13, wobei das NOx-Absorptionsmittel (25) eine Oxidationsfunktion hat, um die Kohlenwasserstoffe in dem Abgas bei einer Temperatur zu oxidieren, die höher als eine vorbestimmte Temperatur ist, und wobei eine Zeitabstimmung der Kraftstoffeinspritzung verzögert wird, wenn die Temperatur des NOx-Absorptionsmittels (25) niedriger als die vorbestimmte Temperatur ist.

15. Brennkraftmaschine gemäß Anspruch 14, wobei das Luftkraftstoffverhältnis des Abgases, das in das NOx-Absorptionsmittel (25) strömt, zu einem von dem stöchiometrischen Luftkraftstoffverhältnis und dem fetten Luftkraftstoffverhältnis gemacht wird, wenn das NOx von dem NOx-Absorptionsmittel (25) abgegeben werden soll.

## Revendications

1. Moteur à combustion interne dans lequel une quantité de production de suie augmente progressivement puis atteint une crête lorsqu'une quantité de gaz inertes introduits dans une chambre de combustion (5) augmente, il est prévu un moyen (37) destiné à juger si le réchauffement du moteur, tout en réalisant une première combustion lorsque la quantité de gaz inertes introduits dans une chambre de combustion (5) est maintenue supérieure à une quantité de gaz inertes lorsque la quantité de production de suie atteint une crête, est terminé, et lorsque le réchauffement du moteur n'est pas terminé, au moins une commande, comprenant
une commande pour réaliser le calage de l'injection du carburant plus tôt que celui lorsque la première combustion est exécutée après que le réchauffement du moteur soit terminé,
une commande pour rendre une pression de l'injection du carburant plus élevée que celle lorsque la première combustion est réalisée après que le réchauffement du moteur soit terminé,
une commande pour rendre le taux des gaz inertes inférieur à celui lorsque la première combustion est exécutée après que le réchauffement du moteur soit terminé,
une commande pour rendre un rapport air-carburant supérieure à celui lorsque la première combustion est exécutée après que le réchauffement du moteur soit terminé,
est exécutée tout en réalisant la première combustion pendant le réchauffement du moteur, de façon à mieux réaliser la première combustion pendant le réchauffement du moteur.

2. Moteur à combustion interne selon la revendication 1, dans lequel la température du carburant et celle des gaz autour du carburant au moment de la combustion dans la chambre de combustion (5) sont des températures auxquelles la quantité de NOx dans les gaz d'échappement devient d'environ 10 ppm au moins.

3. Moteur à combustion interne selon la revendication 1, dans lequel la température du carburant et celle des gaz autour du carburant au moment de la combustion dans la chambre de combustion (5) sont rendues inférieures à celle à laquelle la suie est produite seulement lorsque la charge du moteur est inférieure à une charge prédéterminée.

4. Moteur à combustion interne selon la revendication 1, dans lequel le rapport air-carburant dans la chambre de combustion (5) est amené à un rapport parmi le rapport air-carburant stoechiométrique, un rapport air-carburant pauvre légèrement plus pauvre que le rapport air-carburant stoechiométrique et un rapport air-carburant riche.

5. Moteur à combustion interne selon la revendication 1, dans lequel un catalyseur (25) possédant une fonction d'oxydation est disposé dans le passage d'échappement (24).

6. Moteur à combustion interne selon la revendication 5, dans lequel le catalyseur (25) est composé d'au moins un sélectionné parmi le groupe composé d'un catalyseur d'oxydation, d'un catalyseur à trois voies et d'un absorbant de NOx.

7. Moteur à combustion interne selon la revendication 1, dans lequel un moyen (40) est prévu pour commuter sélectivement entre une première combustion, lorsque la quantité de gaz inertes introduits dans la chambre de combustion (5) est supérieure à la quantité de gaz inertes lorsque la quantité de production de suie atteint une crête et presque aucune suie n'est produite, et une deuxième combustion, lorsque la quantité de gaz inertes introduits dans la chambre de combustion (5) est inférieure à la quantité de gaz inertes lorsque la quantité de production de suie atteint une crête.

8. Moteur à combustion interne selon la revendication 7, dans lequel la région de fonctionnement du moteur est divisée en une première région de fonctionnement (I) du côté faible charge du moteur et une deuxième région de fonctionnement (II) du côté charge élevée du moteur, la première combustion est réalisée dans la première région de fonctionnement et la deuxième combustion est réalisée dans la deuxième région de fonctionnement.

9. Moteur à combustion interne selon la revendication 1, dans lequel un adsorbant d'hydrocarbures (53) destiné à adsorber les hydrocarbures dans les gaz d'échappement sur celui-ci est disposé dans le passage d'échappement du moteur (24).

10. Moteur à combustion interne selon la revendication 9, dans lequel un moyen (40) est prévu pour commuter sélectivement entre une première combustion, lorsque la quantité de gaz inertes introduits dans la chambre de combustion est supérieure à la quantité de gaz inertes lorsque la quantité de production de suie atteint une crête et presque aucune suie n'est produite, et une deuxième combustion, lorsque la quantité de gaz inertes introduits dans la chambre de combustion est inférieure à la quantité de gaz inertes lorsque la quantité de production de suie atteint une crête, et la première combustion est commutée vers la deuxième combustion lorsque les hydrocarbures adsorbés sur l'adsorbant d'hydrocarbures (53) doivent être éliminés lorsque la première combustion est exécutée.

11. Moteur à combustion interne selon la revendication 1, dans lequel un appareil de recirculation des gaz d'échappement (31) est prévu pour faire recirculer les gaz d'échappement évacués de la chambre de combustion (5) dans un passage d'admission du moteur (17), et les gaz inertes sont composés des gaz d'échappement mis à recirculer.

12. Moteur à combustion interne selon la revendication 11, dans lequel le taux de recirculation des gaz d'échappement est d'environ 55 % ou plus.

13. Moteur à combustion interne selon la revendication 1, dans lequel un absorbant de NOx (25), qui absorbe les NOx contenus dans les gaz d'échappement lorsque rapport air-carburant des gaz d'échappement entrants est pauvre, et libère les NOx absorbés lorsque le rapport air-carburant des gaz d'échappement entrants est le rapport air-carburant stoechiométrique ou riche, est disposé dans un passage d'échappement du moteur (24).

14. Moteur à combustion interne selon la revendication 13, dans lequel l'absorbant de NOx (25) possède une fonction d'oxydation pour oxyder les hydrocarbures dans les gaz d'échappement à une température supérieure à une température prédéterminée, et un calage de l'injection du carburant est retardé lorsque la température de l'absorbant de NOx (25) est inférieure à la température prédéterminée.

15. Moteur à combustion interne selon la revendication 14, dans lequel le rapport air-carburant des gaz d'échappement entrant dans l'absorbant de NOx (25) correspond à l'un parmi le rapport air-carburant stoechiométrique et le rapport air-carburant riche lorsque les NOx doivent être libérés de l'absorbant de NOx (25).
